# EUROPEAN PATENT SPECIFICATION

(11) **EP 1 650 286 B1**
(45) Date of publication and mention of the grant of the patent: **30.04.2008**
(21) Application number: 06000506.3
(22) Date of filing: 08.02.2002
(51) Int. Cl.: C09K 19/20, C09K 19/30, C09K 19/54

(54) **Liquid crystal composition containing an optically active compound and liquid crystal electro-optical element**
Flüssigkristallzusammensetzung enthaltend optisch aktive Verbindung und flüssigkristallines elektrooptisches Element
Composition de cristaux liquides contenant un composé optiquement actif et élément électro-optique à cristaux liquides

(30) Priority: 08.02.2001 JP 2001032682; 12.10.2001 JP 2001315739; 07.12.2001 JP 2001373886
(43) Date of publication of application: 26.04.2006
(62) Divisional of application: 02711421.4
(73) Proprietor: Seimi Chemical Co., Ltd., Chigasaki-city, Kanagawa 253-8585 (JP)
(72) Inventor: Yokokouji, Osamu, Chigasaki-city Kanagawa 253-8585 (JP); Tachibana, Tamon, Chigasaki-city Kanagawa 253-8585 (JP); Oiwa, Masaki, Chigasaki-city Kanagawa 253-8585 (JP); Shimizu, Kanetaka, Chigasaki-city Kanagawa 253-8585 (JP); Koike, Takeshi, Chigasaki-city Kanagawa 253-8585 (JP)
(74) Representative: Müller-Boré & Partner Patentanwälte

(56) References cited:
- EP-A- 0 217 354
- EP-A- 0 311 329
- EP-A- 0 315 193
- WO-A-95/14067
- US-A- 5 209 867
- PATENT ABSTRACTS OF JAPAN vol. 017, no. 577 (C-1122), 20 October 1993 (1993-10-20) -& JP 05 170679 A (ASAHI GLASS CO LTD; others: 01), 9 July 1993 (1993-07-09)
- PATENT ABSTRACTS OF JAPAN vol. 1997, no. 01, 31 January 1997 (1997-01-31) -& JP 08 245960 A (DAINIPPON INK & CHEM INC), 24 September 1996 (1996-09-24)

## Description

### TECHNICAL FIELD

The present invention relates to a liquid crystal composition containing a novel optically active compound, and a liquid crystal electro-optical element employing the liquid crystal composition.

### BACKGROUND ART

Liquid crystal electro-optical elements are used for various applications such as not only display devises for office automation equipment, but also measuring devices, automotive instruments, display devices for home electric appliance, clocks and desk-top calculators.

A liquid crystal electro-optical element has such a structure that a pair of substrates, at least one of the substrates having a transparent electrode, an intermediate protective film and a liquid crystal alignment film formed on its surface, is disposed with a certain distance, and a liquid crystal material is enclosed between the substrates, and it functions as an optical switching element by applying a voltage from the electrode to the liquid crystal material to change the alignment state of the liquid crystal material thereby to change its optical properties.

For twisted nematic (TN) and super twisted nematic (STN) liquid crystal electro-optical elements, a liquid crystal composition having a small amount of an optically active compound (chiral agent) added thereto is employed to achieve uniform twist alignment.

Optically active compounds widely used at present may, for example, be a compound of the following formula (CN), a compound of the following formula (CB-15) and a compound of the following formula (R-811). Further, a liquid crystal composition having an optically active compound added thereto is employed also for a reflective cholesteric (chiral nematic) liquid crystal element.

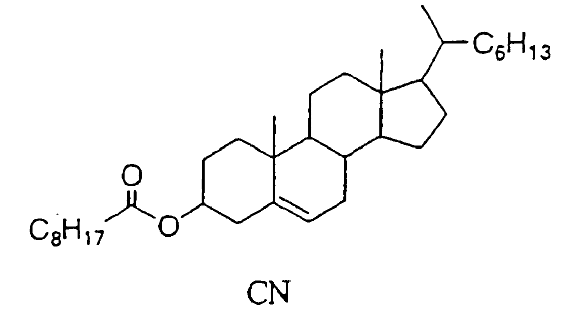

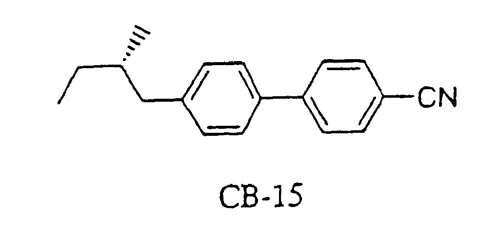

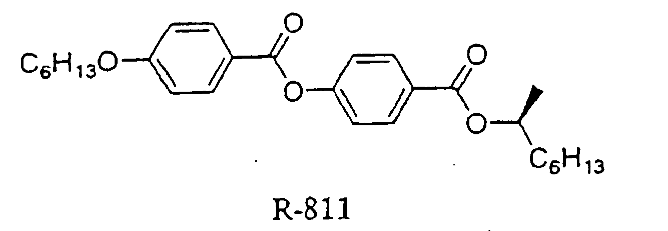

However, a cholesteric liquid crystal (chiral nematic liquid crystal) composition has a high viscosity, and thus it has such problems as a low speed of response and a high driving voltage, since a large amount of the optically active compound is added thereto. There is a corelation between the driving voltage of a liquid crystal element and the dielectric anisotropy (Δε) of a liquid crystal composition, and a liquid crystal composition having a high dielectric anisotropy can be driven at a low driving voltage. In order to make a reflective cholesteric (chiral nematic) liquid crystal element be driven at a low voltage, an optically active compound having a high dielectric anisotropy as well as a nematic liquid crystal composition having a high dielectric anisotropy has been required.

The applicant has proposed an optically active compound having a low viscosity and a high helical twisting power in JP-A-11-255675. However, the helical twisting power of the optically active compounds as specifically disclosed in JP-A-11-255675 is insufficient particularly for a reflective cholesteric (chiral nematic) liquid crystal element, and thus a higher helical twisting power is required, and further, optically active compounds having a high dielectric anisotropy which have not been realized in JP-A-11-255675 are required.

The helical pitch length induced when an optically active compound is added to a liquid crystal composition is determined by the helical twisting power characteristic to the compound. The smaller the helical twisting power of an optically active compound, the longer the helical pitch length induced, and the addition amount has to be increased to shorten the helical pitch length. In general, if the addition amount of the optically active compound is increased, performances as a liquid crystal material tend to decrease, as compared with before addition and problems are caused such as an increase in the viscosity, a decrease in the speed of response, an increase in the driving voltage, a decrease in the isotropic phase transition temperature and a reduction of the temperature range at which a specific phase such as a nematic phase or a cholesteric phase is shown. Thus, an optically active compound having a high helical twisting power has been required.

In order to overcome such objects, JP-A-10-251185 proposes optically active compounds having a low viscosity and a high helical twisting power.

In recent years, attention has been paid to a reflective cholesteric liquid crystal element employing a cholesteric liquid crystal composition having a large amount (at a level of from 10 to 30 wt%) of an optically active compound added to a nematic liquid crystal composition, and utilizing such a phenomenon that the cholesteric liquid crystal selectively reflects light having a wavelength equal to the product of the average reflective index of the liquid crystal material and the helical pitch length. The reflective cholesteric liquid crystal element has a high efficiency of light since no deflecting plate or color filter is required, and a higher brightness can be obtained when a liquid crystal composition having a higher reflective index anisotropy (Δn) is employed. Further, a voltage has to be applied only when the changeover of display (writing) since the display state is maintained (memory properties), whereby the element consumes only a low electric power. However, since a large amount of an optically active compound is added, the cholesteric liquid crystal composition has a high viscosity, whereby there are problems such as a low speed of response and a high driving voltage. In order to overcome such problems, an optically active compound which has a helical twisting power higher than that of the optically active compounds as disclosed in JP-A-10-251185, and which provides an aimed helical pitch length even by addition in a small amount, has been required.

Further, many of practicable liquid crystal compositions are prepared by mixing at least one compound having a nematic phase in the vicinity of room temperature and at least one compound having a nematic phase in a temperature region higher than room temperature. Further, in recent years, along with diversification of products to which liquid crystal electro-optical elements are applied, a liquid crystal composition having an increased operating temperature range to the high temperature side has been required, and accordingly, particularly a liquid crystal composition having a high transition temperature from the liquid crystal phase to the isotropic phase [hereinafter referred to as clear point (Tc)] has been required.

Accordingly, an optically active compound which, when added to a liquid crystal composition, does not lower the clear point (Tc) of the liquid crystal composition has been required.

EP-A-0 311 329 describes optically active 1-(2-halogen-substituted-phenyl)-ethanols and derivatives thereof for use in liquid crystal compositions.

EP-A-0 315 193 describes an optically active compound and a chiral liquid crystal composition containing the same.

US-patent 5,209,867 describes novel derivatives of aromatic carboxylic acid esters which are useful as a dopant for liquid crystal compositions, and smectic liquid crystal compositions containing at least one of said derivatives.

EP-A-0 217 354 describes an optically active tolan derivative which is useful as an electro-optical display material.

JP-A-08-245960 describes a liquid crystal composition comprising a specific monofunctional polymerizable chiral monomer and an unpolymerizable nematic liquid crystal compound, wherein the liquid crystal composition is capable of regulating its intrinsic pitch within a wide range of temperatures.

WO-A-95/14067 describes a chiral nematic liquid crystalline composition comprising a glassy chiral nematic compound of low molar mass that includes a cycloaliphatic radical, a nematogenic moiety, and a chiral moiety, or a mixture of a nematic liquid crystalline compound of low molar mass that includes a cycloaliphatic radical and a nematogenic moiety and a chiral compound of low molar mass that includes a chiral moiety.

JP-05-170679 describes a monofluoroalkane derivative and a liquid crystal composition.

It is an object of the present invention to provide a liquid crystal composition which contains a novel optically active compound having a high helical twisting power, having a high dielectric anisotropy (Δε) and providing excellent performances also as a chiral agent, and which can be driven at a low voltage, and a liquid crystal element employing the liquid crystal composition, particularly a STN or cholesteric (chiral nematic) liquid crystal element.

### DISCLOSURE OF THE INVENTION

Under these circumstances, the present invention has been accomplished to overcome the above problems, and provides a liquid crystal composition containing at least an optically active compound of the following formula (3) (C* is asymmetric carbon):

R⁵ -Pn-C* HX²-CH₂ -A⁶ -y² -A⁷ -R⁶ (3)

wherein R⁵ is a hydrogen atom, a C₁₋₁₀ alkyl group or a C₁₋₁₀ alkoxy group,
R⁶ is a C₁₋₁₀ monovalent aliphatic hydrocarbon group in which an oxygen atom may be inserted in the carbon-carbon linkage, and of which at least one hydrogen atom may be substituted with a fluorine atom, or a hydrogen atom, a halogen atom or a cyano group (provided that in a case of an aliphatic hydrocarbon group, it may contain an asymmetric carbon atom),
Pn is a 1,4-phenylene group of which at least one hydrogen atom may be substituted with a halogen atom,
each of A⁶ and A⁷ which are independent of each other, is a non-substituted trans-1,4-cyclohexylene group or a 1,4-phenylene group of which at least one hydrogen atom may be substituted with a halogen atom,
X² is a fluorine atom, a methyl group or a trifluoromethyl group, and
Y² is a C(O)O group or a OC(O) group.

### Explanation regarding the optically active compound of the above formula (3)

The optically active compounds of the formula (3) are optically active compounds containing an asymmetric carbon atom (C*) in their structures. In the present specification, the following symbols have the following meanings.

Ph: a non-substituted 1,4-phenylene group, Ph^{F}: a monofluoro-1,4-phenylene group (the position of the fluorine atom is not particularly limited), Ph^{2F}: a difluoro-1,4-phenylene group (the positions of the fluorine atoms are not particularly limited). Further, the substituted or non-substituted 1,4-phenylene group and the non-substituted trans-1,4-cyclohexylene group will generically be referred to as "ring group".

Of the compound of the formula (3), the absolute configuration of the group bonded to the asymmetric carbon atom may be either R or S.

In the compound (3), R⁵ is preferably a hydrogen atom, a C₁₋₁₀ alkyl group or a C₁₋₁₀ alkoxy group. R⁵ is preferably a hydrogen atom, a C₁₋₃ alkyl group or a methoxy group, particularly preferably a hydrogen atom.

R⁶ may be a C₁₋₁₀ monovalent aliphatic hydrocarbon group which may have an oxygen atom inserted in the carbon-carbon linkage, and of which at least one hydrogen atom may be substituted with a fluorine atom (hereinafter "C₁₋₁₀ monovalent aliphatic hydrocarbon group which may have an oxygen atom inserted in the carbon-carbon linkage, and of which at least one hydrogen atom may be substituted with a fluorine atom" will sometimes be referred to as "Ra group"), a hydrogen atom, a halogen atom or a cyano group.

In a case where R⁶ is an Ra group, the Ra group may be an alkyl group containing no saturated group, or one containing an unsaturated group such as an alkenyl group, an alkapolyenyl group, an alkynyl group or an alkapolyynyl group.

R⁶ is preferably a hydrogen atom, a halogen atom, a C₁₋₁₀ alkyl group, a C₂₋₁₀ alkenyl group (in a case where the alkenyl group may be a cis-alkenyl group or a trans-alkenyl group, a trans-alkenyl group is more preferred), a C₂₋₁₀ alkynyl group or a C₁₋₁₀ alkoxy group. Particularly preferred is a hydrogen atom, a fluorine atom, a C₁₋₈ alkyl group or a C₁₋₈ alkoxy group. The Ra group preferably has a linear structure.

Further, the Ra group may contain an asymmetric carbon atom. The alkyl group containing an asymmetric carbon atom as Ra may, for example, be CH₃CH₂)₄-C*H(CH₃)-, CH₃(CH₂)₅-C*H(CH₃)-, CH₃CH₂-C*H(CH₃)-CH₂- or H. The alkoxy group containing an asymmetric carbon atom may, for example, be CH₃(CH₂)₅-C*H(CH₃)O- or CH₃(CH₂)₄-C*H(CH₃)O-. The absolute configuration of the group which is bonded to the asymmetric carbon atom is not particularly limited.

Further, Ra in a case of an alkenyl group is preferably a trans-3-pentenyl group or a 3-butenyl group.

As Ra, a polyfluoroalkyl group such as a perfluoroalkyl group or a polyfluoro(alkoxyalkyl) group is also preferred, and a trifluoromethyl group, a trifluoromethoxy group or a 2,2,2-trifluoroethoxy group may, for example, be mentioned.

Further, as Ra, an alkoxyalkyl group is also preferred, and an ethoxymethyl group may, for example, be mentioned.

In the compound (3), Pn is a 1,4-phenylene group of which at least one hydrogen atom may be substituted with a halogen atom. As Pn, a non-substituted 1,4-phenylene group is preferred.

Each of A⁶ and A⁷ which may be the same or different, is preferably a non-substituted 1,4-phenylene group or a non-substituted trans-1,4-cyclohexylene group.

In a case where each of A⁶ and A⁷ is a 1,4-phenylene group of which at least one hydrogen atom is substituted with a halogen atom, the halogen atom is preferably a fluorine atom, and particularly preferred is a monofluoro-1,4-phenylene group or a difluoro-1,4-phenylene group. The position substituted with a halogen atom is not particularly limited.

x² is preferably a fluorine atom, a methyl group or a trifluoromethyl group, particularly preferably a methyl group.

Y² represents a -C(O)O- group (carbonyloxy group) or a -OC(O)- group (oxycarbonyl group).

Now, the compounds (3) of the present invention will be explained below. The part corresponding to -C*HX- will sometimes be referred to simply as -CHX-, and the absolute configuration of the group which is bonded to the asymmetric carbon atom is not particularly limited unless otherwise specified. In the following explanation, an alkyl group such as C₃H₇- or C₆H₁₃- represents a linear alkyl group. Each of Pn¹ and Pn² which are independent of each other, is a 1,4-phenylene group of which at least one hydrogen atom may be substituted with a halogen atom, and Cy is a non-substituted trans-1,4-cyclohexylene group.

Among the above compounds (3), the following compounds of the formulae 5 to 8 are preferably mentioned.

R⁵-Pn-C*HX²CH₂-Pn¹-Y²-Pn²-R⁶ Formula 5

R⁵-Pn-C*HX²-CH₂-Pn¹-Y²-Cy-R⁶ Formula 6

R⁵-Pn-C*HX²-CH₂-Cy-Y²-Pn²-R⁶ Formula 7

R⁵-Pn-C*HX²-CH₂-Cy-Y²-Cy-R⁶ Formula 8

Further, the following compounds of the formulae 9 and 10 may also be preferably mentioned.

H-Pn-C*H(CH³)-CH₂-Pn¹-Y²Pn²-R⁶ Formula 9

H-Pn-C*H(CH₃)-CH₂-Pn¹-Y²-Cy-R⁶ Formula 10

As the compound of the formula 5, the following compounds of the formulae 5A-1 to 5C-2 may be preferably mentioned.

R⁵-Ph-CH(CH₃)-CH₂-Ph-C(O)O-Pn²-R⁶ Formula 5A-1

R⁵-Ph-CHF-CH₂-Ph-C(O)O-Pn²-R⁶ Formula 5B-1

R⁵-Ph-CH(CF₃)-CH₂-Ph-C(O)O-Pn²-R⁶ Formula 5C-1

R⁵-PH-CH(CH₃)-CH₂-Ph-OC(O)-Pn²-R⁶ Formula 5A-2

R⁵-Ph-CHF-CH₂-Ph-OC(O)-Pn²-R⁶ Formula 5B-2

R⁵-Ph-CH(CF₃)-CH₂-Ph-OC(O)-Pn²-R⁶ Formula 5C-2

As the compound of the formula 6, the following compounds of the formulae 6A-1 to 6C-2 may be preferably mentioned.

R⁵-Ph-CH(CH₃)-CH₂-Ph-C(O)O-Cy-R⁶ Formula 6A-1

R⁵-Ph-CHF-CH₂-Ph-C(O)O-Cy-R⁶ Formula 6B-1

R⁵-Ph-CH(CF₃)-CH₂-Ph-C(O)O-Cy-R⁶ Formula 6C-1

R⁵-Ph-CH(CH₃)-CH₂-Ph-OC(O)-Cy-R⁶ Formula 6A-2

R⁵-Ph-CHF-CH₂-Ph-OC(O)-Cy-R⁶ Formula 6B-2

R⁵-Ph-CH(CF₃)-CH₂-Ph-OC(O)-Cy-R⁶ Formula 6C-2

As the compound of the formula 7, the following compounds of the formulae 7A-1 to 7C-2 may be preferably mentioned.

R⁵-PH-CH(CH₃)-CH₂-Cy-C(O)O-Pn²-R⁶ Formula 7A-1

R⁵-Ph-CHF-CH₂-Cy-C(O)O-Pn²-R⁶ Formula 7B-1

R⁵-Ph-CH(CF₃)-CH₂-Cy-C(O)O-Pn²-R⁶ Formula 7C-1

R⁵-Ph-CH(CH₃)-CH₂-Cy-OC(O)-Pn²-R⁶ Formula 7A-2

R⁵-Ph-CHF-CH₂-Cy-OC(O)-Pn²-R⁶ Formula 7B-2

R⁵-PH-CH(CF₃)-CH₂-Cy-OC(O)-Pn²-R⁶ Formula 7C-2

As the compound of the formula 8, the following compounds of the formulae 8A-1 to 8C-2 may be preferably mentioned.

R⁵-Ph-CH(CH₃)-CH₂-Cy-C(O) O-Cy-R⁶ Formula 8A-1

R⁵-Ph-CHF-CH₂-Cy-C(O)O-Cy-R⁶ Formula 8B-1

R⁵-Ph-CH(CF₃)-CH₂-Cy-C(O)O-Cy-R⁶ Formula 8C-1

R⁵-Ph-CH(CH₃)-CH₂-Cy-OC(O)-Cy-R⁶ Formula 8A-2

R⁵-Ph-CHF-CH₂-Cy-OC(O)-Cy-R⁶ Formula 8B-2

R⁵-Ph-CH(CF₃)-CH₂-Cy-OC(O)-Cy-R⁶ Formula 8C-2

As specific examples of the compound of the formula 5A-1, the following compounds may be preferably mentioned.

H-Ph-CH(CH₃)-CH₂-Ph-C(O)O-Ph-H,

H-Ph-CH(CH₃)-CH₂-Ph-C(O)O-Ph-OCH₃,

H-Ph-CH (CH₃)-CH₂-Ph-C(O)O-Ph-OC₆H₁₃,

H-Ph-CH(CH₃)-CH₂-Ph-C(O)O-Ph-OCH(CH₃)C₆H₁₃,

H-ph-CH(CH₃)-CH₂-Ph-C(O)O-Ph-C₄H₉,

H-Ph-CH(CH₃)-CH₂-Ph-C(O)O-Ph-CH₂CH(CH₃)CH₂CH₃,

CH₃-Ph-CH(CH₃)-CH₂-Ph-C(O)O-Ph-CH₃,

C₂H₅-Ph-CH(CH₃)-CH₂-Ph-C(O)O-Ph-C₂H₅,

C₃H₇-Ph-CH(CH₃)-CH₂-Ph-C(O)O-Ph-C₃H₇,

CH₃-Ph-CH(CH₃)-CH₂-Ph-C(O)O-Ph-OCH₃,

CH₃O-Ph-CH(CH₃)-CH₂-Ph-C(O)O-Ph-C₃H₇,

CH₃O-Ph-CH(CH₃)-CH₂-Ph-C(O)O-Ph-OC₆H₁₃,

H-Ph-CH(CH₃)-CH₂-Ph-C(O)O-Ph-CH₂OC₂H₅,

H-Ph-CH(CH₃)-CH₂-Ph-C(O)O-Ph-CH₂CH₂CH=CHCH₃,

H-PH-CH(CH₃)-CH₂-Ph-C(O)O-Ph-C≡CCH₃,

H-Ph-CH(CH₃)-CH₂-Ph-C(O)O-Ph-CF₃,

H-Ph-CH(CH₃)-CH₂-Ph-C(O)O-Ph-OCF₃,

H-Ph-CH(CH₃)-CH₂-Ph-C(O)O-Ph-OCH₂CF₃,

H-Ph-CH(CH₃)-CH₂-Ph-C(O)O-Ph-F,

H-Ph-CH(CH₃)-CH₂-Ph-C(O)O-Ph-Cl,

H-Ph-CH(CH₃)-CH₂-Ph-C(O)O-Ph-CN,

H-Ph-CH(CH₃)-CH₂-Ph-C(O)O-Ph^{F}-F,

H-Ph-CH(CH₃)-CH₂-Ph-C(O)O-Ph^{2F}-F.

As specific examples of the compound of the formula 5A-2, the following compounds may be preferably mentioned.

H-Ph-CH(CH₃)-CH₂-Ph-OC(O)-Ph-H,

H-Ph-CH(CH₃)-CH₂-Ph-OC(O)-Ph-OCH₃,

H-Ph-CH(CH₃)-CH₂-Ph-OC(O)-Ph-OC₆H_{13,}

H-Ph-CH(CH₃)-CH₂-Ph-OC(O)-Ph-OCH(CH₃)C₆H₁₃,

H-Ph-CH(CH₃)-CH₂-Ph-OC(O)-Ph-C₄H₉,

H-Ph-CH(CH₃)-CH₂-Ph-OC(O)-Ph-CH₂CH(CH₃)CH₂CH₃,

CH₃-Ph-CH(CH₃)-CH₂-Ph-OC(O)-Ph-CH₃,

C₂H₅-Ph-CH(CH₃)-CH₂-Ph-OC(O)-Ph-C₂H₅,

C₃H₇-Ph-CH(CH₃)-CH₂-Ph-OC(O)-Ph-C₃H₇,

CH₃-Ph-CH(CH₃)-CH₂-Ph-OC(O)-Ph-OCH₃,

CH₃O-Ph-CH(CH₃)-CH₂-Ph-OC(O)-Ph-C₃H₇,

CH₃O-Ph-CH(CH₃)-CH₂-Ph-OC(O)-Ph-OC₆H₁₃,

H-Ph-CH(CH₃)-CH₂-Ph-OC(O)-Ph-CH₂OC₂H₅,

H-Ph-CH (CH₃)-CH₂-Ph-OC(O)-Ph-CH₂CH₂CH=CHCH₃,

H-PH-CH (CH₃)-CH₂-Ph-OC(O)-Ph-C≡CCH₃,

H-PH-CH(CH₃)-CH₂-Ph-OC(O)-Ph-CF₃,

H-Ph-CH(CH₃)-CH₂-Ph-OC(O)-Ph-OCF₃,

H-Ph-CH(CH₃)-CH₂-Ph-OC(O)-Ph-OCH₂CF₃,

H-Ph-CH(CH₃)-CH₂-Ph-OC(O)-Ph-F,

H-Ph-CH(CH₃)-CH₂-Ph-OC(O)-Ph-Cl,

H-Ph-CH(CH₃)-CH₂-Ph-OC(O)-Ph-CN,

H-Ph-CH(CH₃)-CH₂-Ph-OC(O)-Ph^{F}-F,

H-Ph-CH(CH₃)-CH₂-Ph-OC(O)-Ph^{2F}-F.

As specific examples of the compound of the formula 5B-1, the following compounds may be preferably mentioned.

H-Ph-CHF-CH₂-Ph-C(O)O-Ph-H,

H-Ph-CHF-CH₂-Ph-C(O)O-Ph-OCH₃,

H-Ph-CHF-CH₂-Ph-C(O)O-Ph-OC₆H₁₃,

H-Ph-CHF-CH₂-Ph-C(O)O-Ph-OCH(CH₃)C₆H₁₃,

H-Ph-CHF-CH₂-Ph-C(O)O-Ph-C₄H₉,

H-Ph-CHF-CH₂-Ph-C(O)O-Ph-CH₂CH(CH₃)CH₂CH₃,

CH₃-Ph-CHF-CH₂-Ph-C(O)O-Ph-CH₃,

C₂H₅-Ph-CHF-CH₂-Ph-C(O)O-Ph-C₂H₅,

C₃H₇-Ph-CHF-CH₂-Ph-C(O)O-Ph-C₃H₇,

CH₃-Ph-CHF-CH²-Ph-C(O)O-Ph-OCH₃,

CH₃O-Ph-CHF-CH₂-Ph-C(O)O-Ph-C₃H₇,

CH₃O-Ph-CHF-CH₂-Ph-C(O)O-Ph-OC₆H₁₃,

H-Ph-CHF-CH₂-Ph-C(O)O-Ph-CH₂OC₂H₅,

H-Ph-CHF-CH₂-Ph-C(O)O-Ph-CH₂CH₂CH=CHCH₃,

H-Ph-CHF-CH₂-Ph-C(O)O-Ph-C≡CCH₃,

H-Ph-CHF-CH₂-Ph-C(O)O-Ph-CF₃,

H-Ph-CHF-CH₂-Ph-C(O)O-Ph-OCF₃,

H-Ph-CHF-CH₂-Ph-C(O)O-Ph-OCH₂CF₃,

H-Ph-CHF-CH₂-Ph-C(O)O-Ph-F,

H-Ph-CHF-CH₂-Ph-C(O)O-Ph-Cl,

H-Ph-CHF-CH₂-Ph-C(O)O-Ph-CN,

H-Ph-CHF-CH₂-Ph-C(O)O-Ph^{F}-F,

H-Ph-CHF-CH2-Ph-C(O)O-Ph^{2F}-F.

As specific examples of the compound of the formula 5B-2, the following compounds may be preferably mentioned.

H-Ph-CHF-CH₂-Ph-OC(O)-Ph-H,

H-Ph-CHF-CH₂-Ph-OC(O)-Ph-OCH₃,

H-Ph-CHF-CH₂-Ph-OC(O)-Ph-OC₆H₁₃,

H-Ph-CHF-CH₂-Ph-OC(O)-Ph-OCH(CH₃)C₆H₁₃,

H-Ph-CHF-CH₂-Ph-OC(O)-Ph-C₄H₉,

H-Ph-CHF-CH₂-Ph-OC(O)-Ph-CH₂CH(CH₃)CH₂CH₃,

CH₃-Ph-CHF-CH₂-Ph-OC(O)-Ph-CH₃,

C₂H₅-Ph-CHF-CH₂-Ph-OC(O)-Ph-C₂H₅,

C³H₇-Ph-CHF-CH₂-Ph-OC(O)-Ph-C₃H₇,

CH₃-Ph-CHF-CH₂-Ph-OC(O)-Ph-OCH₃,

CH₃O-Ph-CHF-CH₂-Ph-OC(O)-Ph-C₃H₇,

CH₃O-Ph-CHF-CH₂-Ph-OC(O)-Ph-OC₆H₁₃,

H-Ph-CHF-CH₂-Ph-OC(O)-Ph-CH₂OC₂H₅,

H-Ph-CHF-CH₂-Ph-OC(O)-Ph-CH₂CH₂CH=CHCH₃

H-Ph-CHF-CH₂-Ph-OC(O)-Ph-C≡CCH₃,

H-Ph-CHF-CH₂-Ph-OC(O)-Ph-CF₃.

H-Ph-CHF-CH₂-Ph-OC(O)-Ph-OCF₃,

H-Ph-CHF-CH₂-Ph-OC(O)-Ph-OCH₂CF₃,

H-Ph-CHF-CH₂-Ph-OC(O)-Ph-F,

H-Ph-CHF-CH₂-Ph-OC(O)-Ph-Cl,

H-Ph-CHF-CH₂-Ph-OC(O)-Ph-CN,

H-Ph-CHF-CH₂-Ph-OC(O)-Ph^{F}-F,

H-Ph-CHF-CH₂-Ph-OC(O)-Ph^{2F}-F.

As specific examples of the compound of the formula 5C-1, the following compounds may be preferably mentioned.

H-Ph-CH(CF₃)-CH₂-Ph-C(O)O-Ph-H,

H-Ph-CH(CF₃)-CH₂-Ph-C(O)O-Ph-OCH₃,

H-Ph-CH(CF₃)-CH₂-Ph-C (O) O-Ph-OC₆H₁₃,

H-Ph-CH(CF₃)-CH₂-Ph-C(O)O-Ph-OCH(CH₃)C₆H₁₃,

H-Ph-CH(CF₃)-CH₂-Ph-C(O)O-Ph-C₄H₉,

H-Ph-CH(CF₃)-CH₂-Ph-C(O)O-Ph-CH₂CH(CH₃)CH₂CH₃,

CH₃-Ph-CH(CF₃)-CH₂-Ph-C(O)O-Ph-CH₃,

C₂H₅-Ph-CH(CF₃)-CH₂-Ph-C(O)O-Ph-C₂H₅,

C₃H₇-Ph-CH(CF₃)-CH₂-Ph-C(O)O-Ph-C₃H₇,

CH₃-Ph-CH(CF₃)-CH₂-Ph-C(O)O-Ph-OCH₃,

CH₃O-Ph-CH(CF₃)-CH₂-Ph-C(O)O-Ph-C₃H₇,

CH₃O-Ph-CH(CF₃)-CH₂-Ph-C(O)O-Ph-OC₆H₁₃,

H-Ph-CH(CF₃)-CH₂-Ph-C(O)O-Ph-CH₂OC₂H₅,

H-Ph-CH (CF₃)-CH₂-Ph-C(O)O-Ph-CH₂CH₂CH=CHCH₃,

H-Ph-CH(CF₃)-CH₂-Ph-C(O)O-Ph-C≡CCH₃ ,

H-Ph-CH(CF₃)-CH₂-Ph-C(O)O-Ph-CF₃,

H-Ph-CH(CF₃)-CH₂-Ph-C(O)O-Ph-OCF₃,

H-Ph-CH(CF₃)-CH₂-Ph-C(O)O-Ph-OCH₂CF₃,

H-Ph-CH(CF₃)-CH₂-Ph-C(O)O-Ph-F,

H-Ph-CH(CF₃)-CH₂-Ph-C(O)O-Ph-Cl,

H-Ph-CH(CF₃)-CH₂-Ph-C(O)O-Ph-CN,

H-Ph-CH(CF3)-CH₂-Ph-C(O)O-Ph^{F}-F,

H-Ph-CH(CF₃)-CH₂-Ph-C(O)O-Ph^{2F}-F.

As specific examples of the compound of the formula 5C-2, the following compounds may be preferably mentioned.

H-Ph-CH(CF₃)-CH₂-Ph-OC(O)-Ph-H,

H-Ph-CH(CF₃)-CH₂-Ph-OC(O)-Ph-OCH₃.

H-Ph-CH(CF₃)-CH₂-Ph-OC(O)-Ph-OC₆H₁₃,

H-Ph-CH(CF₃)-CH₂-Ph-OC(O)-Ph-OCH(CH₃)C₆H₁₃,

H-Ph-CH(CF₃)-CH₂-Ph-OC(O)-Ph-C₄H₉,

H-Ph-CH(CF₃)-CH₂-Ph-OC(O)-Ph-CH₂CH(CH₃)CH₂CH₃,

CH₃-Ph-CH(CF₃)-CH₂-Ph-OC(O)-Ph-CH₃,

C₂H₅-Ph-CH(CF₃)-CH₂-Ph-OC(O)-Ph-C₂H₅,

C₃H₇-Ph-CH(CF₃)-CH₂-Ph-OC(O)-Ph-C₃H₇,

CH₃-Ph-CH(CF₃)-CH₂-Ph-OC(O)-Ph-OCH₃,

CH₃O-Ph-CH(CF₃)-CH₂-Ph-OC(O)-Ph-C₃H₇,

CH₃O-Ph-CH(CF₃)-CH₂-Ph-OC(O)-Ph-OC₆H₁₃,

H-Ph-CH(CF₃)-CH₂-Ph-OC(O)-Ph-CH₂OC₂H₅,

H-Ph-CH(CF₃)-CH₂-Ph-OC(O)-Ph-CH₂CH₂CH=CHCH₃,

H-Ph-CH(CF₃)-CH₂-Ph-OC(O)-Ph-C≡CCH₃,

H-Ph-CH(CF₃)-CH₂-Ph-OC(O)-Fh-CF₃,

H-Ph-CH(CF₃)-CH₂-Ph-OC(O)-Ph-OCF₃,

H-Ph-CH(CF₃)-CH₂-Ph-OC(O)-Ph-OCH₂CF₃,

H-Ph-CH(CF₃)-CH₂-Ph-OC(O)-Ph-F,

H-Ph-CH(CF₃)-CH₂-Ph-OC(O)-Ph-Cl,

H-Ph-CH(CF₃)-CH₂-Ph-OC(O)-Ph-CN,

H-Ph-CH (CF₃)-CH₂-Ph-OC(O)-Ph^{F}-F,

H-Ph-CH (CF₃)-CH₂-Ph-OC(O)-Ph^{2F}-F.

As specific examples of the compound of the formula 6A-1, the following compounds may be preferably mentioned.

H-Ph-CH(CH₃)-CH₂-Ph-C(O)O-Cy-H,

H-Ph-CH(CH₃)-CH₂-Ph-C(O)O-Cy-C₃H₇,

H-Ph-CH (CH₃)-CH₂-Ph-C(O)O-Cy-CH₃CH(CH₃)CH₂CH₃,

H-Ph-CH(CH₃)-CH₂-Ph-C(O)O-Cy-OCH₃,

H-Ph-CH (CH₃)-CH₂-Ph-C(O)O-Cy-OCH(CH₃)C₆H₁₃,

CH₃-Ph-CH(CH₃)-CH₂-Ph-C(O)O-Cy-CH₃,

C₂H₅-Ph-CH(CH₃)-CH₂-Ph-C(O)O-Cy-C₂H₅,

C₃H₇-Ph-CH(CH₃)-CH₂-Ph-C(O)O-Cy-C₃H₇,

CH₃-Ph-CH(CH₃)-CH₂-Ph-C(O)O-Cy-OCH₃,

CH₃O-Ph-CH(CH₃)-CH₂-Ph-C(O)O-Cy-C₃H₇,

H-Ph-CH (CH₃)-CH₂-Ph-C(O)O-Cy-CH₂OC₂H₅,

H-Ph-CH(CH₃)-CH₂-Ph-C(O)O-Cy-CH₂CH₂CH=CHCH₃,

H-Ph-CH(CH₃)-CH₂-Ph-C(O)O-Cy-C≡CCH₃,

H-Ph-CH(CH₃)-CH₂-Ph-C(O)O-Cy-CF₃,

H-Ph-CH(CH₃)-CH₂-Ph-C(O)O-Cy-OCF₃.

As specific examples of the compound of the formula 6A-2, the following compounds may be preferably mentioned.

H-Ph-CH(CH₃)-CH₂-Ph-OC(O)-Cy-H,

H-Ph-CH(CH₃)-CH₂-Ph-OC(O)-Cy-C₃H₇,

H-Ph-CH(CH₃)-CH₂-Ph-OC(O)-Cy-CH₂CH(CH₃)CH₂CH₃,

H-Ph-CH(CH₃)-CH₂-Ph-OC(O)-Cy-OCH₃,

H-Ph-CH(CH₃)-CH₂-Ph-OC(O)-Cy-OCH(CH₂)C₆H₁₃,

CH₃-Ph-CH(CH₃)-CH₂-Ph-OC(O)-Cy-CH₃,

C₂H₅-Ph-CH(CH₃)-CH₂-Ph-OC(O)-Cy-C₂H₅,

C₃H₇-Ph-CH(CH₃)-CH₂-Ph-OC(O)-Cy-C₃H₇,

CH₃-Ph-CH(CH₃)-CH₂-Ph-OC(O)-Cy-OCH₃,

CH₃O-Ph-CH(CH₃)-CH₂-Ph-OC(O)-Cy-C₃H₇,

H-Ph-CH(CH₃)-CH₂-Ph-OC(O)-Cy-CH₂OC₂H₅,

H-Ph-CH(CH₃)-CH₂-Ph-OC(O)-Cy-CH₂CH₂CH=CHCH₃,

H-Ph-CH(CH₃)-CH₂-Ph-OC(O)-Cy-C≡CCH₃,

H-Ph-CH(CH₃)-CH₂-Ph-OC(O)-Cy-CF₃,

H-Ph-CH(CH₃)-CH₂-Ph-OC(O)-Cy-OCF₃.

As specific examples of the compound of the formula 6B-1, the following compounds may be preferably mentioned.

H-Ph-CHF-CH₂-Ph-C(O)O-Cy-H,

H-Ph-CHF-CH₂-Ph-C(O)O-Cy-C₃H₇,

H-Ph-CHF-CH₂-Ph-C(O)O-Cy-CH₂CH(CH₃)CH₂CH₃,

H-Ph-CHF-CH₂-Ph-C(O)O-Cy-OCH₃,

H-Ph-CHF-CH₂-Ph-C(O)O-Cy-OCH(CH₃)C₆H₁₃,

CH₃-Ph-CHF-CH₂-Ph-C(O)O-Cy-CH₃,

C₂H₅-Ph-CHF-CH₂-Ph-C(O)O-Cy-C₂H₅,

C₃H₇-Ph-CHF-CH₂-Ph-C(O)O-Cy-C₃H₇,

CH₃-Ph-CHF-CH₂-Ph-C(O)O-Cy-OCH₃,

CH₃O-Ph-CHF-CH₂-Ph-C(O)O-Cy-C₃H₇,

H-Ph-CHF-CH₂-Ph-C(O)O-Cy-CH₂OC₂H₅,

H-Ph-CHF-CH₂-Ph-C(O)O-Cy-CH₂CH₂CH=CHCH₃,

H-Ph-CHF-CH₂-Ph-C(O)O-Cy-C≡CCH₃,

H-Ph-CHF-CH₂-Ph-C(O)O-Cy-CF₃,

H-Ph-CHF-CH₂-Ph-C(O)O-Cy-OCF₃.

As specific examples of the compound of the formula 6B-2, the following compounds may be preferably mentioned.

H-Ph-CHF-CH₂-Ph-OC(O)-Cy-H,

H-Ph-CHF-CH₂-Ph-OC (O)-Cy-C₃H₇,

H-Ph-CHF-CH₂-Ph-OC(O)-Cy-CH₂CH(CH₃)CH₂CH₃,

H-Ph-CHF-CH₂-Ph-OC(O)-Cy-OCH₃,

H-Ph-CHF-CH₂-Ph-OC(O)-Cy-OCH(CH₃)C₆H₁₃,

CH₃-Ph-CHF-CH₂-Ph-OC(O)-Cy-CH₃,

C₂H₅-Ph-CHF-CH₂-Ph-OC(O)-Cy-C₂H₅,

C₃H₇-Ph-CHF-CH₂-Ph-OC(O)-Cy-C₃H₇,

CH₃-Ph-CHF-CH₂-Ph-OC(O)-Cy-OCH₃,

CH₃O-Ph-CHF-CH₂-Ph-OC(O)-Cy-C₃H₇,

H-Ph-CHF-CH₂-Ph-OC(O)-Cy-CH₂OC₂H₅,

H-Ph-CHF-CH₂-Ph-OC(O)-Cy-CH₂CH₂CH=CHCH₃,

H-Ph-CHF-CH₂-Ph-OC(O)-Cy-C≡CCH₃,

H-Ph-CHF-CH₂-Ph-OC(O)-Cy-CF₃,

H-Ph-CHF-CH₂-Ph-OC(O)-Cy-OCF₃.

As specific examples of the compound of the formula 6C-1, the following compounds may be preferably mentioned.

H-Ph-CH(CF₃)-CH₂-Ph-C(O)O-Cy-H,

H-Ph-CH(CF₃)-CH₂-Ph-C(O)O-Cy-C₃H₇,

H-Ph-CH (CF₃)-CH₂-Ph-C(O)O-Cy-CH₂CH(CH₃)CH₂CH₃,

H-Ph-CH(CF₃)-CH₂-Ph-C(O)O-Cy-OCH₃,

H-Ph-CH(CF₃)-CH₂-Ph-C(O)O-Cy-OCH(CH₃)C₆H₁₃,

CH₃-Ph-CH(CF₃) -CH₂-Ph-C(O)O-Cy-CH₃,

C₂H₅-Ph-CH(CF₃)-CH₂-Ph-C(O)O-Cy-C₂H₅,

C₃H₇-Ph-CH(CF₃)-CH₂-Ph-C(O)O-Cy-C₃H₇,

CH₃-Ph-CH(CF₃)-CH₂-Ph-C(O)O-Cy-OCH₃,

CH₃O-Ph-CH(CF₃)-CH₂-Ph-C(O)O-Cy-C₃H₇,

H-Ph-CH(CF₃)-CH₂-Ph-C(O)O-Cy-CH₂OC₂H₅,

H-Ph-CH(CF₃)-CH₂-Ph-C(O)O-Cy-CH₂CH₂CH=CHCH₃,

H-Ph-CH(CF₃)-CH₂-Ph-C(O)O-Cy-C≡CCH₃,

H-Ph-CH(CF₃)-CH₂-Ph-C(O)O-Cy-CF₃,

H-Ph-CH(CF₃)-CH₂-Ph-C(O)O-Cy-OCF₃.

As specific examples of the compound of the formula 6C-2, the following compounds may be preferably mentioned.

H-Ph-CH(CF₃)-CH₂-Ph-OC(O)-Cy-H,

H-Ph-CH(CF₃)-CH₂-Ph-OC(O)-Cy-C₃H₇,

H-Ph-CH(CF₃)-CH₂-Ph-OC(O)-Cy-CH₂CH(CH₃)CH₂CH₃,

H-Ph-CH(CF₃)-CH₂-Ph-OC(O)-Cy-OCH₃,

H-Ph-CH(CF₃)-CH₂-Ph-OC(O)-Cy-OCH(CH₃)C₆H₁₃,

CH₃-Ph-CH(CF₃)-CH₂-Ph-OC (O)-Cy-CH₃,

C₂H₅-Ph-CH(CF₃)-CH₂-Ph-OC(O)-Cy-C₂H₅,

C₃H₇-Ph-CH(CF₃)-CH₂-Ph-OC(O)-Cy-C₃H₇,

CH₃-Ph-CH(CF₃)-CH₂-Ph-OC(O)-Cy-OCH₃,

CH₃O-Ph-CH(CF₃)-CH₂-Ph-OC(O)-Cy-C₃H,

H-Ph-CH (CF₃)-CH₂-Ph-OC(O)-Cy-CH₂OC₂H₅,

H-Ph-CH (CF₃)-CH₂-Ph-OC(O)-Cy-CH₂CH₂CH=CHCH₃,

H-Ph-CH(CF₃)-CH₂-Ph-OC(O)-Cy-C≡CCH₃,

H-Ph-CH(CF₃)-CH₂-Ph-OC(O)-Cy-CF₃,

H-Ph-CH(CF₃)-CH₂-Ph-OC(O)-Cy-OCF₃.

As specific examples of the compound of the formula 7A-1, the following compounds may be preferably mentioned.

H-Ph-CH(CH₃)-CH₂-Cy-C(O)O-Ph-H,

H-Ph-CH(CH₃)-CH₂-Cy-C(O)O-Ph-OCH₃,

H-Ph-CH(CH₃)-CH₂-Cy-C(O)O-Ph-OC₆H₁₃,

H-Ph-CH(CH₃)-CH₂-Cy-C(O)O-Ph-OCH(CH₃)C₆H₁₃,

H-Ph-CH(CH₃)-CH₂-Cy-C(O)O-Ph-C₄H₉,

H-Ph-CH(CH₃)-CH₂-Cy-C(O)O-Ph-CH₂CH(CH₃)CH₂CH₃,

CH₃-Ph-CH(CH₃)-CH₂-Cy-C(O)O-Ph-CH₃,

C₂H₅-Ph-CH(CH₃)-CH₂-Cy-C(O)O-Ph-C₂H₅,

C₃H₇-Ph-CH(CH₃)-CH₂-Cy-C(O)O-Ph-C₃H₇,

CH₃-Ph-CH(CH₃)-CH₂-Cy-C(O)O-Ph-OCH₃,

CH₃O-Ph-CH(CH₃)-CH₂-Cy-C(O)O-Ph-C₃H₇,

CH₃O-Ph-CH(CH₃)-CH₂-Cy-C(O)O-Ph-OC₆H₁₃,

H-Ph-CH(CH₃)-CH₂-Cy-C(O)O-Ph-CH₂OC₂H₅,

H-Ph-CH(CH₃)-CH₂-Cy-C(O)O-Ph-CH₂CH₂CH=CHCH₃,

H-Ph-CH(CH₃)-CH₂-Cy-C(O)O-Ph-C≡CCH₃,

H-Ph-CH(CH₃)-CH₂-Cy-C(O)O-Ph-CF₃,

H-Ph-CH(CH₃)-CH₂-Cy-C(O)O-Ph-OCF₃,

H-Ph-CH(CH₃)-CH₂-Cy-C(O)O-Ph-OCH₂CF₃,

H-Ph-CH(CH₃)-CH₂-Cy-C(O)O-Ph-F,

H-Ph-CH(CH₃)-CH₂-Cy-C(O)O-Ph-Cl,

H-Ph-CH(CH₃)-CH₂-Cy-C(O)O-Ph-CN,

H-Ph-CH(CH₃)-CH₂-Cy-C(O)O-Ph^{F}-F,

H-Ph-CH(CH₃)-CH₂-CY-C(O)O-Ph^{2F}-F.

As specific examples of the compound of the formula 7A-2, the following compounds may be preferably mentioned.

H-Ph-CH(CH₃)-CH₂-Cy-OC(O)-Ph-H,

H-Ph-CH(CH₃)-CH₂-Cy-OC(O)-Ph-OCH₃,

H-Ph-CH(CH₃)-CH₂-Cy-OC(O)-Ph-OC₆H₁₃,

H-Ph-CH(CH₃)-CH₂-Cy-OC(O)-Ph-OCH(CH₃)C₆H₁₃,

H-Ph-CH(CH₃)-CH₂-Cy-OC(O)-Ph-C₄H₉,

H-Ph-CH(CH₃)-CH₂-Cy-OC(O)-Ph-CH₂CH(CH₃)CH₂CH₃,

CH₃-Ph-CH(CH₃)-CH₂-Cy-OC(O)-Ph-CH₃,

C₂H₅-Ph-CH(CH₃)-CH₂-Cy-OC(O)-Ph-C₂H₅,

C₃H₇-Ph-CH(CH₃)-CH₂-Cy-OC(O)-Ph-C₃H₇,

CH₃-Ph-CH(CH₃)-CH₂-Cy-OC(O)-Ph-OCH₃,

CH₃O-Ph-CH(CH₃)-CH₂-Cy-OC(O)-Ph-C₃H₇,

CH₃O-Ph-CH(CH₃)-CH₂-Cy-OC(O)-Ph-OC₆H₁₃,

H-Ph-CH(CH₃)-CH₂-Cy-OC(O)-Ph-CH₂OC₂H₅,

H-Ph-CH(CH₃)-CH₂-Cy-OC(O)-Ph-CH₂CH₂CH=CHCH₃,

H-Ph-CH(CH₃)-CH₂-Cy-OC(O)-Ph-C=CCH₃,

H-Ph-CH(CH₃)-CH₂-Cy-OC(O)-Ph-CF₃,

H-Ph-CH(CH₃)-CH₂-Cy-OC(O)-Ph-OCF₃,

H-Ph-CH(CH₃)-CH₂-Cy-OC(O)-Ph-OCH₂CF₃,

H-Ph-CH(CH₃)-CH₂-Cy-OC(O)-Ph-F,

H-Ph-CH(CH₃)-CH₂-Cy-OC(O)-Ph-Cl,

H-Ph-CH(CH₃)-CH₂-Cy-OC(O)-Ph-CN,

H-Ph-CH(CH₃)-CH₂-Cy-OC(O)-Ph^{F}-F,

H-Ph-CH(CH₃)-CH₂-Cy-OC(O)-Ph^{2F}-F.

As specific examples of the compound of the formula 7B-1, the following compounds may be preferably mentioned.

H-Ph-CHF-CH₂-Cy-C(O)O-Ph-H,

H-Ph-CHF-CH₂-Cy-C(O)O-Ph-OCH₃,

H-Ph-CHF-CH₂-Cy-C(O)O-Ph-OC₆H₁₃,

H-Ph-CHF-CH₂-Cy-C(O)O-Ph-OCH (CH₃)C₆H₁₃,

H-Ph-CHF-CH₂-Cy-C(O)O-Ph-C₄H₉,

H-Ph-CHF-CH₂-Cy-C(O)O-Ph-CH₂CH(CH₃)CH₂CH₃,

CH₃-Ph-CHF-CH₂-Cy-C(O)O-Ph-CH₃,

C₂H₅-Ph-CHF-CH₂-Cy-C(O)O-Ph-C₂H₅,

C₃H₇-Ph-CHF-CH₂-Cy-C(O)O-Ph-C₃H₇,

CH₃-Ph-CHF-CH₂-Cy-C(O)O-Ph-OCH₃,

CH₃O-Ph-CHF-CH₂-Cy-C(O)O-Ph-C₃H₇,

CH₃O-Ph-CHF-CH₂-Cy-C(O)O-Ph-OC₆H₁₃,

H-Ph-CHF-CH₂-Cy-C(O)O-Ph-CH₂OC₂H₅,

H-Ph-CHF-CH₂-Cy-C(O)O-Ph-CH₂CH₂CH=CHCH₃

H-Ph-CHF-CH₂-Cy-C(O)O-Ph-C≡CCH₃,

H-Ph-CHF-CH₂-Cy-C(O)O-Ph-CF₃,

H-Ph-CHF-CH₂-Cy-C(O)O-Ph-OCF₃,

H-Ph-CHF-CH₂-Cy-C(O)O-Ph-OCH₂CF₃,

H-Ph-CHF-CH₂-Cy-C(O)O-Ph-F,

H-Ph-CHF-CH₂-Cy-C(O)O-Ph-Cl,

H-Ph-CHF-CH₂-Cy-C(O)O-Ph-CN,

H-Ph-CHF-CH₂-Cy-C (O) O-Ph^{F}-F,

H-Ph-CHF-CH₂-Cy-C(O)O-Ph^{2F}-F.

As specific examples of the compound of the formula 7B-2, the following compounds may be preferably mentioned.

H-Ph-CHF-CH₂-Cy-OC(O)-Ph-H,

H-Ph-CHF-CH₂-Cy-OC(O)-Ph-OCH₃,

H-Ph-CHF-CH₂-Cy-OC(O)-Ph-OC₆H₁₃,

H-Ph-CHF-CH₂-Cy-OC(O)-Ph-OCH(CH₃)C₆H₁₃,

H-Ph-CHF-CH₂-Cy-OC(O)-Ph-C₉H₉,

H-Ph-CHF-CH₂-Cy-OC(O)-Ph-CH₂CH(CH₃)CH₂CH₃,

CH₃-Ph-CHF-CH₂-Cy-OC(O)-Ph-CH₃,

C₂H₅-Ph-CHF-CH₂-Cy-OC(O)-Ph-C₂H₅,

C₃H₇-Ph-CHF-CH₂-Cy-OC(O)-Ph-C₃H₇,

CH₃-Ph-CHF-CH₂-Cy-OC(O)-Ph-OCH₃,

CH₃O-Ph-CHF-CH₂-Cy-OC(O)-Ph-C₃H₇,

CH₃O-Ph-CHF-CH₂-Cy-OC(O)-Ph-OC₆H₁₃,

H-Ph-CHF-CH2-Cy-OC(O)-Ph-CH₂OC₂H₅,

H-Ph-CHF-CH₂-Cy-OC(O)-Ph-CH₂CH₂CH=CHCH₃,

H-Ph-CHF-CH₂-Cy-OC(O)-Ph-C≡CCH₃,

H-Ph-CHF-CH₂-Cy-OC(O)-Ph-CF₃,

H-Ph-CHF-CH₂-Cy-OC(O)-Ph-OCF₃,

H-Ph-CHF-CH₂-Cy-OC(O)-Ph-OCH₂CF₃,

H-Ph-CHF-CH₂-Cy-OC(O)-Ph-F,

H-Ph-CHF-CH₂-Cy-OC(O)-Ph-Cl,

H-Ph-CHF-CH₂-Cy-OC(O)-Ph-CN,

H-Ph-CHF-CH₂-Cy-OC (O) -Ph^{F}-F,

H-Ph-CHF-CH₂-Cy-OC(O)-Ph^{2F}-F.

As specific examples of the compound of the formula 7C-1, the following compounds may be preferably mentioned.

H-Ph-CH(CF₃)-CH₂-Cy-C(O)O-Ph-H,

H-Ph-CH(CF₃)-CH₂-Cy-C(O)O-Ph-OCH₃,

H-Ph-CH(CF₃)-CH₂-Cy-C(O)O-Ph-OC₆H₁₃,

H-Ph-CH(CF₃)-CH₂-Cy-C(O)O-Ph-OCH(CH₃)C₆H₁₃,

H-Ph-CH(CF₃)-CH₂-Cy-C(O)O-Ph-C₄H₉,

H-Ph-CH(CF₃)-CH₂-Cy-C(O)O-Ph-CH₂CH(CH₃)CH₂CH₃,

CH₃-Ph-CH(CF₃)-CH₂-Cy-C(O)O-Ph-CH3,

C₂H₅-Ph-CH(CF₃)-CH₂-Cy-C(O)O-Ph-C₂H₅,

C₃H₇-Ph-CH(CF₃)-CH₂-Cy-C(O)O-Ph-C₃H₇,

CH₃-Ph-CH(CF₃)-CH₂-Cy-C(O)O-Ph-OCH₃,

CH₃O-Ph-CH(CF3)-CH₂-Cy-C(O)O-Ph-C₃H₇,

CH₃O-Ph-CH(CF₃)-CH₂-Cy-C(O)O-Ph-OC₆H₁₃,

H-Ph-CH(CF₃)-CH₂-Cy-C(O)O-Ph-CH₂OC₂H₅,

H-Ph-CH(CF₃)-CH₂-Cy-C(O)O-Ph-CH₂CH₂CH=CHCH₃,

H-Ph-CH(CF₃)-CH₂-Cy-C(O)O-Ph-C≡CCH₃,

H-Ph-CH(CF₃)-CH₂-Cy-C(O)O-Ph-CF₃,

H-Ph-CH(CF₃)-CH₂-Cy-C(O)O-Ph-OCF₃,

H-Ph-CH(CF₃)-CH₂-Cy-C(O)O-Ph-OCH₂CF₃,

H-Ph-CH(CF₃)-CH₂-Cy-C(O)O-Ph-F,

H-Ph-CH(CF₃)-CH₂-Cy-C(O)O-Ph-Cl,

H-Ph-CH(CF₃)-CH₂-Cy-C(O)O-Ph-CN,

H-Ph-CH(CF₃)-CH₂-Cy-C(O)O-Ph^{F}-F,

H-PH-CH(CF₃)-CH₂-C_{y}-C(O)O-Ph^{2F}-F.

As specific examples of the compound of the formula 7C-2, the following compounds may be preferably mentioned.

H-Ph-CH(CF₃)-CH₂-Cy-OC(O)-Ph-H,

H-Ph-CH(CF₃)-CH₂-Cy-OC(O)-Ph-OCH₃,

H-Ph-CH(CF₃)-CH₂-Cy-OC(O)-Ph-OC₆H₁₃,

H-Ph-CH(CF₃)-CH₂-Cy-OC(O)-Ph-OCH(CH₃)C₆H₁₃,

H-Ph-CH(CF₃)-CH₂-Cy-OC(O)-Ph-C₄H₉,

H-Ph-CH(CF₃)-CH₂-Cy-OC(O)-Ph-CH₂CH(CH₃)CH₂CH₃,

CH₃-Ph-CH(CF₃)-CH₂-Cy-OC(O)-Ph-CH₃,

C₂H₅-Ph-CH(CF₃)-CH₂-Cy-OC(O)-Ph-C₂H₅,

C₃H₇-Ph-CH(CF₃)-CH₂-Cy-OC(O)-Ph-C₃H₇,

CH₃-Ph-CH(CF₃)-CH₂-Cy-OC(O)-Ph-OCH₃,

CH₃O-Ph-CH(CF₃)-CH₂-Cy-OC(O)-Ph-C₃H₇,

CH₃O-Ph-CH(CF₃)-CH₂-Cy-OC(O)-Ph-OC₆H₁₃,

H-Ph-CH(CF₃)-CH₂-Cy-OC(O)-Ph-CH₂OC₂H₅,

H-Ph-CH(CF₃)-CH₂-Cy-OC(O)-Ph-CH₂CH₂CH=CHCH₃,

H-Ph-CH(CF₃)-CH₂-Cy-OC(O)-Ph-C≡CCH₃,

H-Ph-CH(CF₃)-CH₂-Cy-OC(O)-Ph-CF₃,

H-Ph-CH(CF₃)-CH₂-Cy-OC(O)-Ph-OCF₃,

H-Ph-CH(CF₃)-CH₂-Cy-OC (O)-Ph-OCH₂CF₃,

H-Ph-CH(CF₃)-CH₂-Cy-OC(O)-Ph-F,

H-Ph-CH(CF₃)-CH₂-Cy-OC(O)-Ph-Cl,

H-Ph-CH(CF₃)-CH₂-Cy-OC(O)-Ph-CN,

H-Ph-CH(CF₃)-CH₂-Cy-OC(O)-Ph^{F}-F,

H-Ph-CH(CF₃)-CH₂-Cy-OC(O)-Ph^{2F}-F.

As specific examples of the compound of the formula 8A-1, the following compounds may be preferably mentioned.

H-Ph-CH(CH₃)-CH₂-Cy-C(O)O-Cy-H,

H-Ph-CH(CH₃)-CH₂-Cy-C (O)O-Cy-C₃H₇,

H-Ph-CH(CH₃)-CH₂-Cy-C(O)O-Cy-CH₂CH(CH₃)CH₂CH₃,

H-Ph-CH(CH₃)-CH₂-Cy-C(O)O-Cy-OCH₃,

H-Ph-CH(CH₃)-CH₂-Cy-C(O)O-Cy-OCH(CH₃)C₆H₁₃,

CH₃-Ph-CH(CH₃)-CH₂-Cy-C(O)O-Cy-CH₃,

C₂H₅-Ph-CH(CH₃)-CH₂-Cy-C(O)O-Cy-C₂H₅,

C₃H₇-Ph-CH(CH₃)-CH₂-Cy-C(O)O-Cy-C₃H₇,

CH₃-Ph-CH(CH₃)-CH₂-Cy-C(O)O-Cy-OCH₃,

CH₃O-Ph-CH(CH₃)-CH₂-Cy-C(O)O-Cy-C₃H₇,

H-Ph-CH(CH₃)-CH₂-Cy-C(O)O-Cy-CH₂OC₂H₅,

H-Ph-CH(CH₃)-CH₂-Cy-C(O)O-Cy-CH₂CH₂CH=CHCH₃,

H-Ph-CH(CH₃)-CH₂-Cy-C(O)O-Cy-C≡CCH₃,

H-Ph-CH(CH₃)-CH₂-Cy-C(O)O-Cy-CF₃,

H-Ph-CH(CH₃)-CH₂-Cy-C(O)O-Cy-OCF₃.

As specific examples of the compound of the formula 8A-2, the following compounds may be preferably mentioned.

H-Ph-CH(CH₃)-CH₂-Cy-OC(O)-Cy-H,

H-Ph-CH(CH₃)-CH₂-Cy-OC(O)-Cy-C₃H₇,

H-Ph-CH(CH₃)-CH₂-Cy-OC(O)-Cy-CH₂CH(CH₃)CH₂CH₃,

H-Ph-CH(CH₃)-CH₂-Cy-OC(O)-Cy-OCH₃,

H-Ph-CH(CH₃)-CH₂-Cy-OC(O)-Cy-OCH(CH₃)C₆H₁₃,

CH₃-Ph-CH(CH₃)-CH₂-Cy-OC(O)-Cy-CH₃,

C₂H₅-Ph-CH(CH₃)-CH₂-Cy-OC(O)-Cy-C₂H₅,

C₃H₇-Ph-CH(CH₃)-CH₂-Cy-OC(O)-Cy-C₃H₇,

CH₃-Ph-CH(CH₃)-CH₂-Cy-OC(O)-Cy-OCH₃,

CH₃O-Ph-CH(CH₃)-CH₂-Cy-OC(O)-Cy-C₃H₇,

H-Ph-CH(CH₃)-CH₂-Cy-OC(O)-Cy-CH₂OC₂H₅,

H-Ph-CH(CH₃)-CH₂-Cy-OC(O)-Cy-CH₂CH₂CH=CHCH,

H-Ph-CH(CH₃)-CH₂-Cy-OC(O)-Cy-C≡CCH₃,

H-Ph-CH(CH₃)-CH₂-Cy-OC(O)-Cy-CF₃,

H-Ph-CH(CH₃)-CH₂-Cy-OC(O)-Cy-OCF³.

As specific examples of the compound of the formula 8B-1, the following compounds may be preferably mentioned.

H-Ph-CHF-CH₂-Cy-C(O)O-Cy-H,

H-Ph-CHF-CH₂-Cy-C(O)O-Cy-C₃H₇,

H-Ph-CHF-CH₂-Cy-C(O)O-Cy-CH₂CH(CH₃)CH₂CH₃,

H-Ph-CHF-CH₂-Cy-C(O)O-Cy-OCH₃,

H-Ph-CHF-CH₂-Cy-C(O)O-Cy-OCH(CH₃)C₆H₁₃,

CH₃-Ph-CHF-CH₂-Cy-C(O)O-Cy-CH₃,

C₂H₅-Ph-CHF-CH₂-Cy-C(O)O-Cy-C₂H₅,

C₃H₇-Ph-CHF-CH₂-Cy-C(O)O-Cy-C₃H₇,

CH₃-Ph-CHF-CH₂-Cy-C(O)O-Cy-OCH₃,

CH₃O-Ph-CHF-CH₂-Cy-C(O)O-Cy-C₃H₇,

H-Ph-CHF-CH₂-Cy-C(O)O-Cy-CH₂OC₂H₅,

H-Ph-CHF-CH₂-Cy-C(O)O-Cy-CH₂CH₂CH=CHCH₃,

H-Ph-CHF-CH₂-Cy-C(O)O-Cy-C≡CCH₃,

H-Ph-CHF-CH₂-Cy-C(O)O-Cy-CF₃,

H-Ph-CHF-CH₂-Cy-C(O)O-Cy-OCF₃.

As specific examples of the compound of the formula 8B-2, the following compounds may be preferably mentioned.

H-Ph-CHF-CH₂-Cy-OC(O)-Cy-H,

H-Ph-CHF-CH₂-Cy-OC(O)-Cy-C₃H₇,

H-Ph-CHF-CH₂-Cy-OC(O)-Cy-CH₂CH(CH₃)CH₂CH₃,

H-Ph-CHF-CH₂-Cy-OC(O)-Cy-OCH₃,

H-Ph-CHF-CH₂-Cy-OC(O)-Cy-OCH(CH₃)C₆H₁₃,

CH₃-Ph-CHF-CH₂-Cy-OC(O)-Cy-CH₃,

C₂H₅-Ph-CHF-CH₂-Cy-OC(O)-Cy-C₂H₅,

C₃H₇-Ph-CHF-CH₂-Cy-OC(O)-Cy-C₃H₇,

CH₃-Ph-CHF-CH₂-Cy-OC(O)-Cy-OCH₃,

CH₃O-Ph-CHF-CH₂-Cy-OC(O)-Cy-C₃H₇,

H-Ph-CHF-CH₂-Cy-OC(O)-Cy-CH₂OC₂H₅,

H-Ph-CHF-CH₂-Cy-OC(O)-Cy-CH₂CH₂CH=CHCH₃,

H-Ph-CHF-CH₂-Cy-OC(O)-Cy-C≡CCH₃,

H-Ph-CHF-CH₂-Cy-OC(O)-Cy-CF₃,

H-Ph-CHF-CH₂-Cy-OC(O)-Cy-OCF₃.

As specific examples of the compound of the formula 8C-1, the following compounds may be preferably mentioned.

H-Ph-CH(CF₃)-CH₂-Cy-C(O)O-Cy-H,

H-Ph-CH(CF₃)-CH₂-Cy-C(O)O-Cy-C₃H₇,

H-Ph-CH(CF₃)-CH₂-Cy-C(O)O-Cy-CH₂CH(CH₃)CH₂CH₃,

H-Ph-CH(CF₃)-CH₂-Cy-C(O)O-Cy-OCH₃,

H-Ph-CH(CF₃)-CH₂-C_{Y}-C(O)O-Cy-OCH(CH₃)C₆H₁₃,

CH₃-Ph-CH(CF₃)-CH₂-Cy-C(O)O-Cy-CH₃,

C₂H₅-Ph-CH(CF₃)-CH₂-Cy-C(O)O-Cy-C₂H₅,

C₃H₇-Ph-CH(CF₃)-CH₂-Cy-C(O)O-Cy-C₃H₇,

CH₃-Ph-CH(CF₃)-CH₂-Cy-C(O)O-Cy-OCH₃,

CH₃O-Ph-CH(CF₃)-CH₂-Cy-C(O)O-Cy-C₃H₇ ,

H-Ph-CH (CF₃)-CH₂-Cy-C(O)O-Cy-CH₂OC₂H₅,

H-Ph-CH (CF₃)-CH₂-Cy-C(O)O-Cy-CH₂CH₂CH=CHCH₃,

H-Ph-CH(CF₃)-CH₂-Cy-C(O)O-Cy-C=CCH₃,

H-Ph-CH(CF₃)-CH₂-Cy-C(O)O-Cy-CF_{3,}

H-Ph-CH(CF₃)-CH₂-Cy-C(O)O-Cy-OCF₃.

As specific examples of the compound of the formula 8C-2, the following compounds may be preferably mentioned.

H-Ph-CH(CF₃)-CH₂-Cy-OC(O)-Cy-H,

H-Ph-CH (CF₃)-CH₂-Cy-OC(O)-Cy-C₃H₇,

H-Ph-CH (CF₃)-CH₂-Cy-OC(O)-Cy-CH₂CH(CH₃)CH₂CH₃,

H-Ph-CH (CF₃)-CH₂-Cy-OC(O)-Cy-OCH₃,

H-Ph-CH (CF₃)-CH₂-Cy-OC(O)-Cy-OCH(CH₃)C₆H₁₃,

CH₃-Ph-CH(CF₃)-CH₂-Cy-OC(O)-Cy-CH₃,

C₂H₅-Ph-CH(CF₃)-CH₂-Cy-OC(O)-Cy-C₂H₅,

C₃H₇-Ph-CH(CF₃)-CH₂-Cy-OC(O)-Cy-C₃H₇,

CH₃-Ph-CH(CF₃)-CH₂-Cy-OC(O)-Cy-OCH₃,

CH₃O-Ph-CH(CF₃)-CH₂-Cy-OC(O)-Cy-C₃H₇,

H-Ph-CH(CF₃)-CH₂-Cy-OC(O)-Cy-CH₂OC₂H₅,

H-Ph-CH(CF₃)-CH₂-Cy-OC(O)-Cy-CH₂CH₂CH=CHCH₃,

H-Ph-CH(CF₃)-CH₂-Cy-OC(O)-Cy-C≡CCH₃,

H-Ph-CH(CF₃)-CH₂-Cy-OC(O)-Cy-CF₃,

H-Ph-CH(CF₃)-CH₂-Cy-OC(O)-Cy-OCF₃.

The compounds of the formula 3 of the present invention are novel compounds. A compound wherein A⁶ is a 1,4-phenylene group of which at least one hydrogen atom may be substituted with a halogen atom, and Y² is a C(O)O group, may be produced by the following process.

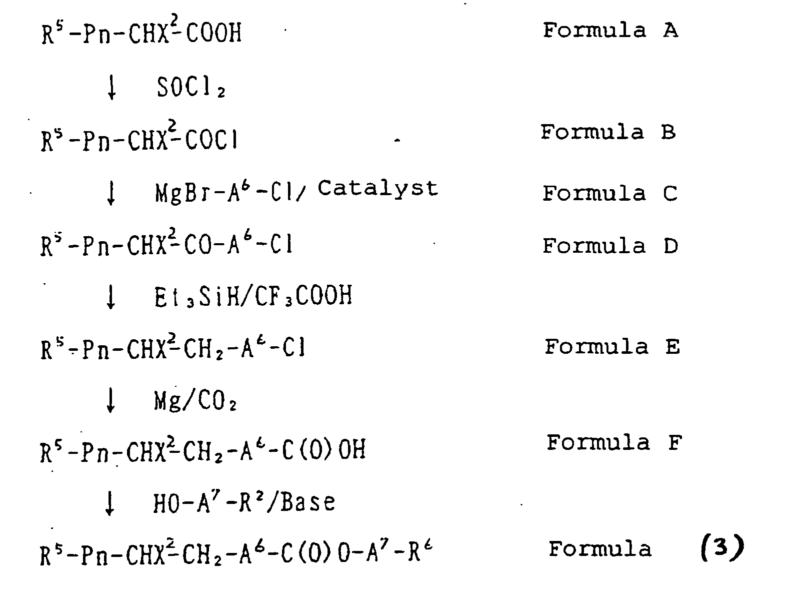

An optically active carboxylic acid (formula A) is subjected to acid chloridation with thionyl chloride to obtain an acid chloride (formula B), which is reacted with a Grignard reagent (formula C) which is a chlorobenzene derivative in the presence of a catalyst to obtain a ketone derivative (formula D). Then, it is reduced with triethylsilane in the presence of trifluoroacetic acid to obtain a chlorobenzene derivative (formula E) which is formed into a Grignard reagent with Mg, which is reacted with carbon dioxide to obtain a benzoic acid derivative (formula F), which is finally reacted with a phenol derivative or a cyclohexanol derivative in the presence of a base to obtain an aimed compound (formula 3). In each reaction, the optical purity of the optically active compound of each formula is maintained.

Further, a compound wherein A⁶ is a 1,4-phenylene group of which at least one hydrogen atom may be substituted with a halogen atom, and Y² is a OC(O) group, may be produced by the following process.

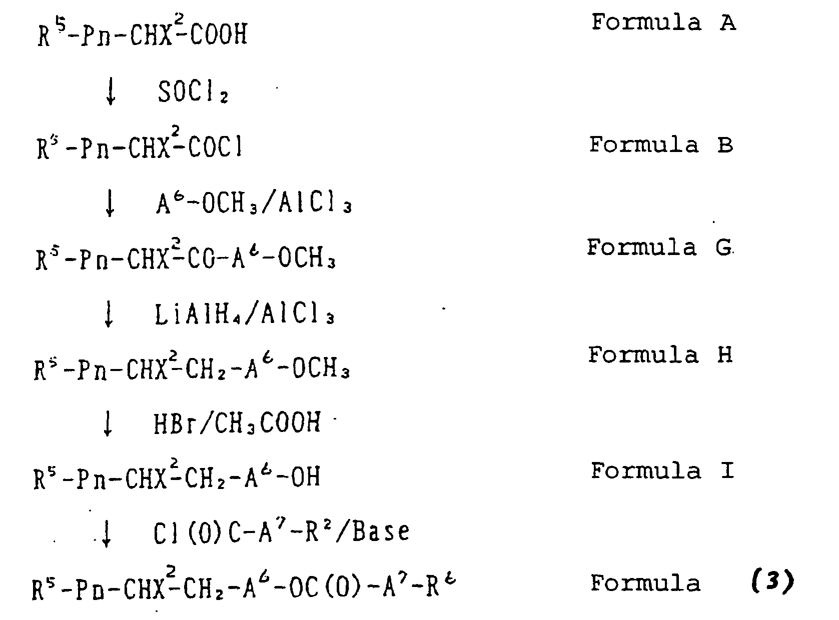

An optically active carboxylic acid (formula A) is subjected to acid chloridation with thionyl chloride to obtain an acid chloride (formula B), which is reacted with an anisole derivative in the presence of aluminum chloride to obtain a ketone derivative (formula G). Then, it is reduced with lithium aluminum hydride in the presence of aluminum chloride to obtain an anisole derivative (formula H), which is reacted with bromic acid in the presence of acetic acid to obtain a phenol derivative (formula 3), which is finally reacted with an acid chloride derivative in the presence of a base to obtain an aimed compound (formula 3). In each reaction, the optical purity of the optically active compound of each formula is maintained.

Further, a compound wherein A⁶ is a non-substituted trans-1,4-cyclohexylene group and Y is a OC(O) group, may be produced by the following process. In the following explanation, Ch represents a 1,4-cyclohexenylene group, and O=C₆H₉- represents a 4-oxocyclohexyl group.

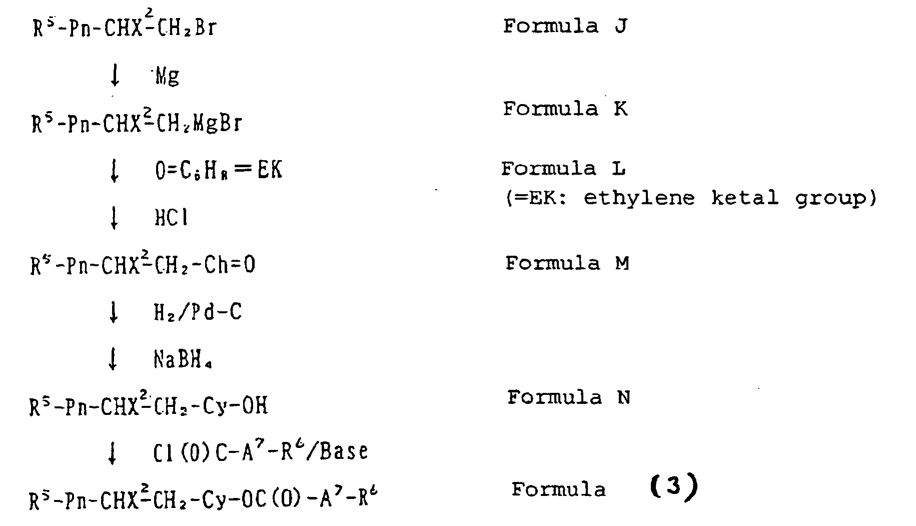

An optically active boron compound (formula J) is formed into a Grignard reagent (formula K) with metal magnesium, which is reacted with a cyclohexanone derivative (formula L) and dehydrated with hydrochloric acid to obtain a cyclohexene compound (formula M), which is subjected to dehydration reaction in the presence of a palladium carbon catalyst and reduced with sodium borohydride to obtain an alcohol derivative (formula N), which is reacted with an acid chloride compound in the presence of a base to obtain an aimed compound (formula 3). In each reaction, the optical purity of the optically active compound of each formula is maintained.

Further, a compound wherein A⁶ is a non-substituted trans-1,4-cyclohexylene group and Y² is a C(O)O group, may be produced by the following process.

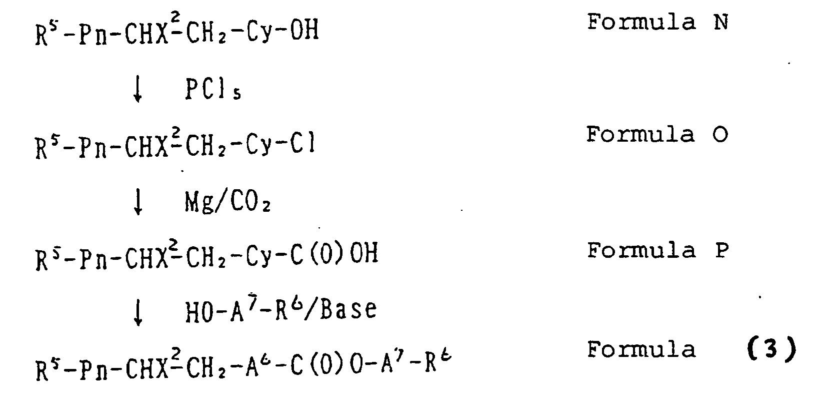

An alcohol derivative (formula N) is chlorinated (formula O) with phosphorus pentachloride, and formed into a Grignard reagent with Mg, which is reacted with carbon dioxide to obtain a carboxylic acid derivative, which is finally reacted with a phenol derivative in the presence of a base to obtain an aimed compound (formula 3). In each reaction, the optical purity of the optically active compound of each formula is maintained.

At least one type of the compound (formula (3)) is incorporated in another liquid crystal material or other liquid crystal material and non-liquid crystal material (hereinafter other liquid crystal material and non-liquid crystal material will generically be referred to as "another material") to obtain a liquid crystal composition.

In a case where the compound (formula (3)) is incorporated in another material to obtain a liquid crystal composition, as the amount of the compound (formula (3)), it is preferably contained in an amount of from 0.1 to 40 parts by mass (the total amount in a case where at least two types of the compounds (formula (3)) are incorporated), more preferably from 1 to 20 parts by mass, in 100 parts by mass of the liquid crystal composition.

In a case where at least two types of the compounds (formula 3) are incorporated in another material, the absolute configurations of the asymmetric carbon atoms in said two types of the compounds (formula 3) may be the same or different.

As another material, the following compounds may be exemplified. Each of R^{C} and R^{D} which are independent of each other, is an alkyl group, an alkoxy group, a halogen atom or a cyano group, and at least one hydrogen atom in each of R^{C} and R^{D} may be substituted with e.g. a halogen atom or a cyano group. Each of Z³, Z⁴, Z⁵ and Z⁶ which are independent of one another, is a ring structure such as a 5-membered ring or a 6-membered ring such as a cyclohexane ring, a benzene ring, a dioxane ring or a pyridine ring, and may be non-substituted or substituted. Further, the binding group between rings may be another binding group. They may optionally be changed depending upon the required performances.

R^{C}-Z³Z⁴R^{D},

R^{C}-Z³-COO-Z⁴-R^{D},

R^{C}-Z³-C≡C-Z⁴-R^{D},

R^{C}-Z³-CH₂CH₂-Z⁴-R^{D},

R^{C}-Z³-Z⁴-Z⁵-R^{D},

R^{C}-Z³-COO-Z⁴-Z⁵-R^{D},

R^{C}-Z³-Z⁴4COO-Z⁵-R^{D},

R^{C}-Z³-COO-Z⁴-COO-Z⁵-R^{D},

R^{C}-Z³-CH₂CH₂-Z⁴-C≡C-Z⁵-R^{D},

R^{C}-Z³-Z⁴-Z⁵-Z⁶-R^{D}.

The liquid crystal composition containing the compound (formula 3) of the present invention is sandwiched between substrates provided with an electrode by e.g. a method of injecting it into a liquid crystal cell to constitute a liquid crystal element. The liquid crystal element may be used by various modes of TN mode, STN mode, guest/host (GH) mode, dynamic scattering mode, phase change mode, DAP mode, two-frequency driving mode, ferroelectric liquid crystal display mode and reflective cholesteric mode. Particularly, the liquid crystal composition of the present invention is preferably employed for a STN liquid crystal electric display element and reflective cholesteric electric display element.

Now, specific examples of the constitution and production process of the liquid crystal element will be explained below.

On a substrate of e.g. plastic or glass, an undercoat layer of e.g. SiO₂ or Al₂O₃ or a color filter layer is formed as the case requires, an electrode of e.g. In₂O₃-SnO₂ (ITO) or SnO₂ is formed thereon, followed by patterning, and an overcoat layer of e.g. polyimide, polyamide, SiO₂ or Al₂O₃ is formed as the case requires, followed by alignment treatment, and a sealing material is printed thereon, and such substrates are disposed so that the electrode sides face each other and the periphery is sealed, and the sealing material is cured to form an empty cell.

To this empty cell, the liquid crystal composition containing the compound of the present invention is injected, and the inlet is sealed with a sealing compound to constitute a liquid crystal cell. To this liquid crystal cell, as the case requires, e.g. a deflecting plate, a color deflecting plate, a light source, a color filter, a semipermeable reflecting plate, a reflecting plate, an optical waveguide or an ultraviolet cut filter is laminated, e.g. characters or figures are printed, or a nonglare treatment is carried out, to obtain a liquid crystal device.

The above explanation is only to exemplify basic constitution and production process of a liquid crystal element, and various constitutions such as a two-layer liquid crystal cell comprising a substrate employing a two-layer electrode and two liquid crystal layers formed thereon, and an active matrix element employing an active matrix substrate having an active element formed thereon such as TFT or MIM may be employed.

The compound (formula 3) has a short helical pitch length and a low viscosity as compared with conventionally employed optically active compounds. Since the compound (formula 3) has a short helical pitch length, a liquid crystal composition which provides, when used for a TN or STN or reflective cholesteric liquid crystal display element, an element having a uniform twist alignment, can be obtained, by addition of a small amount of the compound (formula 3) to the liquid crystal composition as compared with conventional optically active compounds. Thus, the viscosity of the liquid crystal composition having the compound (formula (3)) added thereto can be lowered as compared with conventional one since the addition amount of the compound (formula 3) is small and the viscosity of the compound is low as compared with conventional one. Thus, a liquid crystal element having a high speed of response can be obtained by employing the liquid crystal composition.

The obtained element is suitable as a STN liquid crystal electric display element with a high twist angle which draws an attention in recent years, or a reflective cholesteric electric display element. Further, it may also be used for e.g. a GH liquid crystal element employing a polychromatic colorant or a ferroelectric liquid crystal electric display element.

Now, the present invention will be explained more specifically with reference to Examples.

### EXAMPLE 3-1

### Preparation of (R)-1-(4-[(4-((S)-1-methylheptyloxy))benzoyloxy]phenyl)-2-phenylpropane

### First step

### Preparation of (S)-(+)-1-(4-methoxyphenyl)-2-phenylpropane-1-one

Into a 500 ml eggplant-type flask, 30 g of (S)-(+)-2-phenylpropionic acid, 120 ml of tetrachloroethylene and 35.7 g of thionyl chloride were charged, several drops of N,N-dimethylaniline were added thereto, and a reaction was carried out at room temperature for 24 hours. Then, tetrachloroethylene and thionyl chloride were distilled off under reduced pressure to obtain an acid chloride.

To a separate 200 ml four-necked flask, 24.5 g of anisole, 26.64 g of aluminum chloride and 24 ml of 1,2-dichloroethane were charged and cooled to -20°C, and a 1,2-dichloroethane solution of the above obtained acid chloride was dropwise added thereto. After the temperature was raised to 0°C, reaction was carried out for 1 hour, and the reaction liquid was poured into ice water. After the organic phase was separated, the aqueous phase was extracted with toluene, the toluene layer and the organic phase were put together, washed with water and dried over anhydrous magnesium sulfate. The drying agent was removed, the solvent was distilled off under reduced pressure, and recrystallization from a mixed solvent of methanol/acetone was carried out to obtain 40.38 g of (S)-(+)-1-(4-methoxyphenyl)-2-phenylpropane-1-one [H-Ph-CH(CH₃)C(O)-Ph-OCH₃] as a white solid (yield: 84%).

### Second step

### Preparation of (R)-(-)-1-(4-methoxyphenyl)-2-phenylpropane

Employing a 2L four-necked flask equipped with a condenser tube, 7.25 g of lithium aluminum hydride was stirred in 290 mL of diethyl ether for 5 minutes. Then, 25.48 g of aluminum chloride as a 280 mL of diethyl ether solution was dropwise added thereto while cooling with ice. After stirring for 5 minutes, 38.26 g of (S)-(+)-1-(4-methoxyphenyl)-2-phenylpropane-1-one as a 245 mL diethyl ether solution was dropwise added thereto. Then, reflux under heating was carried out for 3 hours. After cooling to 0°C, treatment with diluted hydrochloric acid was carried out, extraction with diethyl ether was carried out for liquid separation, and drying over anhydrous sodium sulfate was carried out overnight. After the solvent was distilled off, purification by column chromatography (developing solvent: hexane) was carried out to obtain 30.55 g of (R)-(-)-1-(4-methoxyphenyl)-2-phenylpropane [H-Ph-CH(CH₃)-CH₂-Ph-OCH₃] (yield: 85%).

### Third step

### Preparation of (R)-(-)-1-(4-hydroxyphenyl)-2-phenylpropane

Into a 1L four-necked flask equipped with a condenser tube, 28.55 g of (R)-(-)-1-(4-methoxyphenyl)-2-phenylpropane, 570 mL of acetic acid and 59 mL of 48% hydrobromic acid were charged, and a reaction was carried out at 110°C for 7 hours. After cooling, acetic acid was distilled off under reduced pressure, and 100 mL of water and 140 mL of toluene were added thereto. The organic phase was separated, the aqueous phase was extracted with toluene, the toluene layer and the organic phase were put together, the solvent was distilled off under reduced pressure, and the obtained crystals were recrystallized from methanol to obtain 26.65 g of (R)-(-)-1-(4-hydroxyphenyl)-2-phenylpropane [H-Ph-CH(CH₃)-CH₂-Ph-OH] (yield: 99.5%).

### Fourth step

### Preparation of (R)-1-(4-[(4-((S)-1-methylheptyloxy))benzoyloxy]phenyl)-2-phenylpropane

Into a 300 mL eggplant-type flask, 15.24 g of (4-((S)-1-methylheptyloxy))benzoic acid, 10.7 g of thionyl chloride and 60 mL of tetrachloroethylene were charged, and several drops of N,N-dimethylaniline were added. After reaction at room temperature for 24 hours, the solvent was distilled off under reduced pressure. 13.0 g of (R)-(-)-1-(4-hydroxyphenyl)-2-phenylpropane obtained in fourth step, 6 mL of pyridine and 90 mL of toluene were added thereto, followed by reaction at room temperature for 48 hours. 54 mL of water was added thereto, the organic phase was separated, the aqueous phase was extracted with toluene, the toluene layer and the organic phase were put together, and the solvent was distilled off. Then, purification by silica gel column chromatography (developing solvent: hexane/toluene=1/1) and recrystallization from a mixed solvent of ethanol and acetone were carried out to obtain 11.1 g of (R)-1-(4-[(4-((S)-1-methylheptyloxy))benzoyloxy]phenyl)-2-phenylpropane [H-Ph-CH(CH₃)-CH₂-Ph-OC(O)-Ph-O-CH(CH₃)-C₆H₁₃] (yield: 40%). MS m/e: 444 (M⁺)

The following compounds are obtained in the same manner as in Example 3-1.

(R)-H-Ph-CH(CH₃)-CH₂-Ph-OC(O)-Ph-OCH(CH₃)C₄H₉,

(R)-H-Ph-CH(CH₃)-CH₂-Ph-OC(O)-Ph-CH₂-CH(CH₃)C₂H₄.

### EXAMPLE 3-2

### Preparation of (R)-1-[(trans-4-propylcyclohexylcarbonyloxy)phenyl]-2-phenylpropane

A reaction was carried out in the same manner as in fourth step of Example 1 except that 10.3 g of trans-4-propylcyclohexylcarboxylic acid was employed instead of (4-((S)-1-methylheptyloxy))benzoic acid in fourth step of Example 3-1 to obtain (R)-1-[(trans-4-propylcyclohexylcarbonyloxy)phenyl]-2-phenylpropane [H-Ph-CH(CH₃)-CH₂-Ph-OC(O)-Cy-C₃H₇] (yield: 78%).
MS m/e: 364 (M⁺)

The following compounds are obtained in the same manner as in Example 3-2.

(R)-H-Ph-CH(CH₃)-CH₂-Ph-OC(O)-Cy-OC₆H₁₃,

(R)-H-Ph-CH(CH₃)-CH₂-Ph-OC(O) -Cy-C₅H₁₁,

(R)-H-Ph-CH(CH₃)-CH₂-Ph-OC(O)-Cy-CH₂OC₂H₅,

(R)-H-Ph-CH(CH₃)-CH₂-Ph-OC(O)-Cy-CH₂CH₂CH=CHCH₃,

(R)-H-Ph-CH(CH₃)-CH₂-Ph-OC(O)-Cy-C≡CCH₃;

(R)-H-Ph-CH(CH₃)-CH₂-Ph-OC(O)-Cy-CF₃,

(R)-H-Ph-CH(CH₃)-CH₂-Ph-OC(O)-Cy-OCF₃,

(R)-H-Ph-CH(CH₃)-CH₂-Ph-OC(O)-Cy-OCH₂CF₃.

### EXAMPLE 3-3

### Preparation of (R)-1-[(trans-4-propylcyclohexyloxycarbonyl)phenyl]-2-phenylpropane

### First step

### Preparation of (S)-1-(4-chlorophenyl)-2-phenylpropane-1-one

Into a 10L four-necked flask, 600 g (4.00 mol) of (S)-(+)-2-phenylpropionic acid, 2.4L of tetrachloroethylene, 951 g (8.00 mol) of thionyl chloride and a small amount of dimethylaniline were added, followed by stirring at room temperature overnight, and excess of thionyl chloride and tetrachloroethylene were distilled off under reduced pressure to obtain 691 g of (S)-2-phenylpropionic chloride.

Into a 10L four-necked flask (flask A), 102 g (4.20 mol) of pieces of magnesium, 200 mL of anhydrous tetrahydrofuran and a small amount of iodine powder were added, a small amount of a solution having 765 g (4.00 mol) of 1-bromo-4-chlorobenzene dissolved in 7.8L of anhydrous tetrahydrofuran was dropwise added thereto in an atmosphere of nitrogen, and assuming that the reaction started when the color of iodine disappeared, the rest of the solution was dropwise added thereto over a period of 3 hours while maintaining the reaction temperature to be at most 30°C, followed by stirring for 1 hour at room temperature after completion of the dropwise addition to prepare a Grignard reagent.

Into a 20L four-necked flask (flask B), 691 g of (S)-2-phenylpropionic chloride and 4.4L of toluene were put and cooled to -10°C in an atmosphere of nitrogen, and 1.41 g (4.00 mmol) of iron(III) acetylacetonate was added thereto. While maintaining the reaction temperature to be at most -10°C, the Grignard reagent prepared in the flask A was dropwise added thereto over a period of 4 hours in an atmosphere of nitrogen, and the temperature was raised to room temperature after completion of the dropwise addition, followed by stirring overnight, and then the mixture was cooled to 10°C, and 4L of diluted hydrochloric acid was added thereto. The organic phase was separated, the aqueous phase was extracted with toluene, the toluene layer and the organic phase were put together, washed with water and saturated salt solution and dried over anhydrous magnesium sulfate, and the solvent was distilled off to obtain a crude product. The crude product was purified by silica gel column chromatography (developing solvent: hexane/toluene=1/1), and recrystallization from ethanol was carried out to obtain 329 g (1.34 mol) of (S)-1-(4-chlorophenyl)-2-phenylpropane-1-one [H-Ph-CH(CH₃)-C(O)-Ph-Cl] as white crystals (yield: 34%).
MS m/e: 244 (M⁺)

### Second step

Into a 5L four-necked flask, 320 g (1.31 mol) of (S)-1-(4-chlorophenyl)-2-phenylpropane-1-one obtained in first step and 1.49 kg (13.1 mol) of trifluoroacetic acid were added and cooled to 0°C, 380 g (3.27 mol) of triethylsilane was dropwise added thereto over a period of 1 hour while maintaining the reaction temperature to be at most 5°C, and after completion of the dropwise addition, the temperature was raised to room temperature, followed by stirring for 3 hours. 1L of toluene was added thereto, trifluoroacetic acid was distilled off under reduced pressure, 1L of toluene was added thereto, and washing with a 5% sodium hydrogen carbonate aqueous solution, water and saturated salt solution, drying over anhydrous magnesium sulfate and distillation of the solvent and by-products were carried out to obtain a crude product. The crude product was purified by silica gel column chromatography (developing solvent: hexane) to obtain 219 g (949 mmol) of (R)-1-(4-chlorophenyl)-2-phenylpropane [H-Ph-CH(CH₃)-CH₂-Ph-Cl] as a colorless liquid (yield: 72%).
MS m/e: 230 (M⁺)

### Third step

Into a 1L four-necked flask, 11.1 g (455 mmol) of pieces of magnesium, 20 mL of anhydrous tetrahydrofuran and a small amount of iodine powder were added. A small amount of a solution having 23.6 g (217 mmol) of ethyl bromide dissolved in 124 mL of anhydrous tetrahydrofuran was dropwise added thereto in an atmosphere of nitrogen, and assuming that the reaction started when the color of iodine disappeared, the rest of the solution was dropwise added thereto over a period of 1 hour while maintaining the reaction temperature to be at most 25°C, and after completion of the dropwise addition, stirring was carried out at room temperature for 1 hour, and 50 g (217 mmol) of (R)-1-(4-chlorophenyl)-2-phenylpropane obtained in second step was added thereto, followed by stirring under reflux with heating for 6 hours. 290 mL of anhydrous tetrahydrofuran was added thereto, the mixture was cooled to -30°C, carbon dioxide gas was blown while maintaining the temperature to be at most -20°C, and after heat generation disappeared, the temperature was raised to room temperature while blowing of carbon dioxide gas was continued. The reaction solution was poured into diluted hydrochloric acid cooled with ice, unreacted magnesium was removed by filtration, the organic phase was separated, the aqueous phase was extracted with methyl-t-butyl ether, the ether layer and the organic phase were put together, washed with water and saturated salt solution and dried over anhydrous sodium sulfate, and the solvent and by-products were distilled off to obtain crystals of a crude product. The crystals were recrystallized from toluene to obtain 44.3 g (184 mmol) of (R)-4-(2-phenylpropyl)benzoic acid [H-Ph-CH(CH₃)-CH₂-Ph-COOH] as white crystals (yield: 85%).

### Fourth step

Into a 200 mL eggplant-type flask, 20.0 g (83.2 mmol) of (R)-4-(2-phenylpropyl)benzoic acid obtained in third step, 80 mL of tetrachloroethylene and 19.8 g (166 mmol) of thionyl chloride were added, followed by stirring at 70°C for 3 hours, and excess of thionyl chloride and tetrachloroethylene were distilled off under reduced pressure to obtain 22.0 g of (R)-4-(2-phenylpropyl)benzoyl chloride [H-Ph-CH(CH₃)-CH₂-Ph-COCl]. Then, to a 200 mL four-necked flask, 22.0 g of (R)-4-(2-phenylpropyl)benzoyl chloride, 103 mL of toluene, 11.8 g (83.2 mmol) of trans-1-hydroxy-4-propylcyclohexane and 7.90 g (99.9 mmol) of pyridine were added, followed by stirring at room temperature overnight. Water was added to the reaction solution to separate the organic phase, the aqueous phase was extracted with toluene, and the toluene layer and the organic phase were put together and washed with diluted hydrochloric acid, a sodium hydrogen carbonate aqueous solution and saturated salt solution and dried over anhydrous magnesium sulfate, and the solvent was distilled off to obtain a crude product. The crude product was purified by silica gel column chromatography (developing solvent: hexane/toluene=3/1), and recrystallization from ethanol was carried out to obtain 22.7 g (62.4 mmol) of (R)-1-[(trans-4-propylcyclohexyloxycarbonyl)phenyl]-2-phenylpropane [H-Ph-CH(CH₃)-CH₂-Ph-C(O)O-Cy-C₃H₇] as white crystals (yield: 75%).
MS m/e: 364 (M+)

The following compounds are obtained in the same manner as in Example 3-3.

(R)-H-Ph-CH(CH₃)-CH₂-Ph-C(O)O-Cy-OC₆H₁₃,

(R)-H-Ph-CH(CH₃)-CH₂-Ph-C(O)O-Cy-C₅H₁₁,

(R)-H-Ph-CH(CH₃)-CH₂-Ph-C(O)O-Cy-CH₂OC₂H₅,

(R)-H-Ph-CH(CH₃)-CH₂-Ph-C(O)O-Cy-CH₂CH₂CH=CHCH₃,

(R)-H-Ph-CH(CH₃)-CH₂-Ph-C(O)O-Cy-C=CCH₃,

(R)-H-PH-CH(CH₃)-CH₂-Ph-C(O)O-Cy-CF₃,

(R)-H-Ph-CH(CH₃)-CH₂-Ph-C(O)O-Cy-OCF₃,

(R)-H-Ph-CH(CH₃)-CH₂-Ph-C(O)O-Cy-OCH₂CF₃.

### EXAMPLE 3-4

5 parts by mass of the compound prepared in Example 1 was added to 95 parts by mass of a liquid crystal composition manufactured by Merck Ltd. (trade name: ZLI-1565) to obtain a liquid crystal composition SA.

Further, to 95 parts by mass of the liquid crystal composition manufactured by Merck Ltd. (trade name: ZLI-1565), 5 parts by mass of the above compound (formula CN) as a commercially available chiral agent was added to obtain a composition SB, and 5 parts by mass of the above compound (formula S-811) as a commercially available chiral agent was added to obtain a liquid crystal composition SC.

Of the obtained liquid crystal compositions SA, SB and SC, the dynamic viscosity in place of the viscosity was measured by using Ostwald viscometer, and the dynamic viscosity of each of the chiral agents was calculated from these values as a 100% extrapolated value. The results are shown in Table 3-1.

**Table 3-1**

| | Dynamic viscosity/25°C (cSt) | Dynamic viscosity/0°C (cSt) |
|---|---|---|
| SA | 1.75 × 10⁵ | 1.19 × 10⁷ |
| SB | 6.05 × 10⁴ | 4.85 × 10⁵ |
| SC | 7.16 × 10⁴ | 2.09 × 10⁷ |

### EXAMPLE 3-5

1 part by mass of the compound prepared in Example 1 was added to 99 parts by mass of a liquid crystal composition manufactured by Merck Ltd. (trade name: ZLI-1565) to obtain a liquid crystal composition SD.

Further, to 99 parts by mass of the liquid crystal composition manufactured by Merck Ltd. (trade name: ZLI-1565), 1 part by mass of the above compound (formula CN) was added to the liquid crystal composition SE, and 1 part by mass of the above compound (formula S-811) was added to obtain a liquid crystal composition SF.

Of the obtained liquid crystal compositions SD, SE and SF, the helical pitch length at 25°C was measured by Cano wedge method, and the PC value of each compound (the helical pitch length (µm·%) when 1 mass% is contained) was obtained. The results are shown in Table 3-2. The direction of the helical twist was measured by a contact method.

**Table 3-2**

| | PC value (µm·%) | Direction of helical twist |
|---|---|---|
| SD | 7.7 | right |
| SE | 21.6 | left |
| SF | 10.4 | left |

### INDUSTRIAL APPLICABILITY

The liquid crystal composition containing the optically active compound of the present invention is a composition novel prior to filing of the present application, and is a liquid crystalline compound, and further, is useful as an optically active compound to be added to the above liquid crystal composition. Namely, it has a high helical twisting power, it provides a small helical pitch length induced, and at the same time, it has a low viscosity, and a liquid crystal element employing the liquid crystal composition of the present invention may have a high speed of response. Further, the liquid crystal composition employing the liquid crystal composition of the present invention has a high refractive index anisotropy (Δn), an extremely high transition temperature (Tc) from the liquid crystal phase to the isotropic phase, and has a low viscosity. Further, it is chemically stable, and is excellent in compatibility with another compound such as another liquid crystal or non-liquid crystal compound. Further, the liquid crystal composition employing the optically active compound of the present invention has such a characteristic that it has a high dielectric anisotropy (Δε), and may be driven at a low voltage.

Accordingly, the addition amount of such an optically active compound is small when it is added to a liquid crystal composition, and thus substantially no increase in the viscosity, decrease in the speed of response, increase in the driving voltage or reduction of the operating temperature range will be caused. At the same time, substantially no decrease in Tc of the liquid crystal composition will be caused, and accordingly a liquid crystal electro-optical element can be driven even at a high temperature range.

Particularly, such an optically active compound having the above characteristics is extremely effective even by addition of a small amount when used for a cholesteric liquid crystal composition to which addition of a large amount of an optically active compound is required, and which is usually considered to have a low speed of response and a high driving voltage, and a liquid crystal display element having brightness and a high contrast can be obtained.

Further, when the liquid crystal composition containing the optically active compound of the present invention is employed to obtain a TN or STN liquid crystal display element, uniform twist alignment can be achieved, and when it is used for a reflective cholesteric liquid crystal element, an aimed reflection wavelength will be obtained.

Further, the liquid crystal composition containing the optically active acetylene derivative compound of the present invention may also be used for various modes such as an active matrix element, a polymer dispersion liquid crystal element, a GH liquid crystal element employing a polychromatic colorant and a ferroelectric liquid crystal element. Further, it may also be used for applications other than for display, such as a dimmer element, a dimmer window, an optical shutter, a polarization exchange element, a varifocal lens, an optical color filter, a colored film, an optical recording element and a temperature indicator.

## Claims

1. A liquid crystal composition containing at least an optically active compound of the following formula (3) (C* is asymmetric carbon):
R⁵-Pn-C*HX²-CH₂-A⁶-Y²-A⁷-R⁶ (3)
wherein R⁵ is a hydrogen atom, a C₁₋₁₀ alkyl group or a C₁₋₁₀ alkoxy group,
R⁶ is a C₁₋₁₀ monovalent aliphatic hydrocarbon group in which an oxygen atom may be inserted in the carbon-carbon linkage, and of which at least one hydrogen atom may be substituted with a fluorine atom, or a hydrogen atom, a halogen atom or a cyano group (provided that in a case of an aliphatic hydrocarbon group, it may contain an asymmetric carbon atom),
Pn is a 1,4-phenylene group of which at least one hydrogen atom may be substituted with a halogen atom,
each of A⁶ and A⁷ which are independent of each other, is a non-substituted trans-1,4-cyclohexylene group or a 1,4-phenylene group of which at least one hydrogen atom may be substituted with a halogen atom,
x² is a fluorine atom, a methyl group or a trifluoromethyl group, and
Y² is a C(O)O group or a OC(O) group.

2. The liquid crystal composition according to Claim 1, wherein the optically active compound of the formula (3) is a compound of any one of the following formulae 5 to 8:
R⁵-Pn-C*HX²-CH²-Pn¹-Y²-Pn²-R⁶ (5)
R⁵-Pn-C*HX²-CH₂-Pn¹-Y²-Cy-R⁶ (6)
R⁵-Pn-C*HX²-CH₂-Cy-Y²-Pn²-R⁶ (7)
R⁵-Pn-C*HX²-CH₂-Cy-Y²-Cy-R⁶ (8)
wherein R⁵, R⁶, Pn, C*, X² and Y² are as defined for the formula (3), each of Pn¹ and Pn² which are independent of each other, is a 1,4-phenylene group of which at least one hydrogen atom may be substituted with a halogen atom, and Cy is a non-substituted trans-1,4-cyclohexylene group.

3. The liquid crystal composition according to Claim 1, wherein the compound of the formula (3) is an optically active compound of the following formula (9):
H-Pn-C*H(CH₃)-CH₂-Pn¹-Y²-Pn²-R⁶ (9)
wherein R⁶, Pn, C* and Y² are as defined for the formula (3), and each of Pn¹ and Pn² which are independent of each other, is a 1,4-phenylene group of which at least one hydrogen atom may be substituted with a halogen atom.

4. The liquid crystal composition according to Claim 1, wherein the compound of the formula (3) is an optically active compound of the following formula (10):
H-Pn-C*H(CH₃)-CH₂-Pn¹-Y²-Cy-R⁶ (10)
wherein R⁶, Pn, C* and Y² are as defined for the formula (3), Pn¹ is a 1,4-phenylene group of which at least one hydrogen atom may be substituted with a halogen atom, and Cy is a non-substituted trans-1,4-cyclohexylene group.

5. A liquid crystal electro-optical element, which comprises the liquid crystal composition as defined in any one of Claims 1 to 4 disposed between substrates having an electrode.

## Patentansprüche

1. Flüssigkristallzusammensetzung, welche mindestens eine optisch aktive Verbindung der folgenden Formel (3) (C* ist ein asymmetrisches Kohlenstoffatom) enthält:
R⁵-Pn-C*HX²-CH₂-A⁶-Y²-A⁷-R⁶ (3)
wobei R⁵ ein Wasserstoffatom, eine C₁₋₁₀-Alkylgruppe oder eine C₁₋₁₀-Alkoxygruppe ist,
R⁶ eine einwertige C₁₋₁₀-aliphatische Kohlenwasserstoffgruppe, in welcher ein Sauerstoffatom in der Kohlenstoff-Kohlenstoff-Verknüpfung insertiert sein kann und von welcher mindestens ein Wasserstoffatom durch ein Fluoratom substituiert sein kann, oder ein Wasserstoffatom, ein Halogenatom oder eine Cyanogruppe ist (mit der Maßgabe, dass in einem Fall einer aliphatischen Kohlenwasserstoffgruppe diese ein asymmetrisches Kohlenstoffatom enthalten kann),
Pn eine 1,4-Phenylengruppe ist, von welcher mindestens ein Wasserstoffatom durch ein Halogenatom substituiert sein kann,
jedes von A⁶ und A⁷, welche voneinander unabhängig sind, eine nicht-substituierte trans-1,4-Cyclohexylengruppe oder eine 1,4-Phenylengruppe, von welcher mindestens ein Wasserstoffatom durch ein Halogenatom substituiert sein kann, ist,
X² ein Fluoratom, eine Methylgruppe oder eine Trifluormethylgruppe ist, und
Y² eine C(O)O-Gruppe oder eine OC(O)-Gruppe ist.

2. Flüssigkristallzusammensetzung nach Anspruch 1, wobei die optisch aktive Verbindung der Formel (3) eine Verbindung der folgenden Formeln 5 bis 8 ist:
R⁵-Pn-C*HX²-CH₂-Pn¹-Y²-Pn²-R⁶ (5)
R⁵-Pn-C*HX²-CH₂-Pn¹-Y²-Cy-R⁶ (6)
R⁵-Pn-C*HX²-CH₂-Cy-Y²-Pn²-R⁶ (7)
R⁵-Pn-C*HX²-CH₂-Cy-Y²-Cy-R⁶ (8)
wobei R⁵, R⁶, Pn, C*, X² und Y² wie für die Formel (3) definiert sind, jedes von Pn¹ und Pn², welche voneinander unabhängig sind, eine 1,4-Phenylengruppe ist, von welcher mindestens ein Wasserstoffatom durch ein Halogenatom substituiert sein kann, und Cy eine nicht-substituierte trans-1,4-Cyclohexylengruppe ist.

3. Flüssigkristallzusammensetzung nach Anspruch 1, wobei die Verbindung der Formel (3) eine optisch aktive Verbindung der folgenden Formel (9) ist:
H-Pn-C*H(CH₃)-CH₂-Pn¹-Y²-Pn²-R⁶ (9)
wobei R⁶, Pn, C* und Y² wie für Formel (3) definiert sind, und jedes von Pn¹ und Pn², welche voneinander unabhängig sind, eine 1,4-Phenylengruppe ist, von welcher mindestens ein Wasserstoffatom durch ein Halogenatom substituiert sein kann.

4. Flüssigkristallzusammensetzung nach Anspruch 1, wobei die Verbindung der Formel (3) eine optisch aktive Verbindung der folgenden Formel (10) ist:
H-Pn-C*H(CH₃)-CH₂-Pn¹-Y²-Cy-R⁶ (10)
wobei R⁶, Pn, C* und Y² wie für Formel (3) definiert sind, Pn¹ eine 1,4-Phenylengruppe ist, von welcher mindestens ein Wasserstoffatom mit einem Halogenatom substituiert sein kann, und Cy eine nicht-substituierte trans-1,4-Cyclohexylengruppe ist.

5. Elektrooptisches Flüssigkristallelement, welches die Flüssigkristallzusammensetzung nach einem der Ansprüche 1 bis 4, angeordnet zwischen Substraten mit einer Elektrode, umfaßt.

## Revendications

1. Composition de cristaux liquides contenant au moins un composé optiquement actif de formule (3) suivante (C* est un carbone asymétrique) :
R⁵-Pn-C*HX²-CH₂-A⁶-Y²-A⁷-R⁶ (3)
dans laquelle R⁵ est un atome d'hydrogène, un groupe alkyle en C₁-C₁₀ ou un groupe alkoxy en C₁-C₁₀,
R⁶ est un groupe hydrocarboné aliphatique monovalent en C₁-C₁₀ dans lequel un atome d'oxygène peut être inséré dans la liaison carbone-carbone, et dont au moins un atome d'hydrogène peut être remplacé par un atome de fluor, ou un atome d'hydrogène, un atome d'halogène ou un groupe cyano (avec la réserve que dans le cas d'un groupe hydrocarboné aliphatique, il peut contenir un atome de carbone asymétrique),
Pn est un groupe 1,4-phénylène dont au moins un atome d'hydrogène peut être remplacé par un atome d'halogène,
chacun de A⁶ et A⁷, qui sont indépendants l'un de l'autre, est un groupe trans-1,4-cyclohexylène non substitué ou un groupe 1,4-phénylène dont au moins un atome d'hydrogène peut être remplacé par un atome d'halogène,
X² est un atome de fluor, un groupe méthyle ou un groupe trifluorométhyle, et
Y² est un groupe C(O)O ou un groupe OC(O).

2. Composition de cristaux liquides selon la revendication 1, dans laquelle le composé optiquement actif de formule (3) est un composé ayant l'une quelconque des formules 5 à 8 suivantes :
R⁵-Pn-C*HX²-CH₂-Pn¹-Y²-Pn²-R⁶ (5)
R⁵-Pn-C*HX²-CH₂-Pn¹-Y²-Cy-R⁶ (6)
R⁵-Pn-C*HX²-CH₂-Cy-Y²-Pn²-R⁶ (7)
R⁵-Pn-C*HX²-CH₂-Cy-Y₂-Cy-R⁶ (8)
dans lesquelles R⁵, R⁶, Pn, C*, X² et Y² sont tels que définis pour la formule (3), chacun de Pn¹ et Pn², qui sont indépendants l'un de l'autre, est un groupe 1,4-phénylène dont au moins un atome d'hydrogène peut être remplacé par un atome d'halogène, et Cy est un groupe trans-1,4-cyclohexylène non substitué.

3. Composition de cristaux liquides selon la revendication 1, dans laquelle le composé de formule (3) est un composé optiquement actif de formule (9) suivante :
H-Pn-C*H(CH₃)-CH₂-Pn¹-Y²-Pn²-R⁶ (9)
dans laquelle R⁶, Pn, C* et Y² sont tels que définis pour la formule (3), et chacun de Pn¹ et Pn², qui sont indépendants l'un de l'autre, est un groupe 1,4-phénylène dont au moins un atome d'hydrogène peut être remplacé par un atome d'halogène.

4. Composition de cristaux liquides selon la revendication 1, dans laquelle le composé de formule (3) est un composé optiquement actif de formule (10) suivante:
H-Pn-CH(CH₃)-CH₂-Pn¹-Y²-Cy-R⁶ (10)
dans laquelle R⁶, Pn, C* et Y² sont tels que définis pour la formule (3), Pn¹ est un groupe 1,4-phénylène dont au moins un atome d'hydrogène peut être remplacé par un atome d'halogène, et Cy est un groupe trans-1,4-cyclohexylène non substitué.

5. Elément électro-optique à cristaux liquides, qui comprend la composition de cristaux liquides, telle que définie dans l'une quelconque des revendications 1 à 4, disposée entre des substrats ayant une électrode.
